# EUROPEAN PATENT APPLICATION

(11) **EP 4 745 198 A1**
(43) Date of publication of application: **20.05.2026**
(21) Application number: 24839781.2
(22) Date of filing: 10.07.2024
(51) Int. Cl.: C08L 101/00, C08K 5/3492, C08L 23/00

(54) **RESIN COMPOSITION, MOLDED ARTICLE, RESIN ADDITIVE COMPOSITION, METHOD FOR PRODUCING RESIN COMPOSITION, METHOD FOR IMPROVING CRYSTALLINITY OF CRYSTALLINE RESIN, AND MATERIAL FOR RESIN ADDITIVE COMPOSITION**

(30) Priority: 10.07.2023 JP 2023113257
(71) Applicant: ADEKA CORPORATION, Arakawa-ku Tokyo 116-8554 (JP)
(72) Inventor: FUKUI, Satoshi, Tokyo 116-8554 (JP); UEDA, Naoto, Tokyo 116-8554 (JP); MUTO, Takashi, Tokyo 116-8554 (JP)
(74) Representative: Gill Jennings & Every LLP
(86) International application number: PCT/JP2024/024912
(87) International publication number: WO 2025/013891

(57) **Abstract**

Provided is a resin composition improved in crystallinity of a crystalline resin. A resin composition contains a crystalline resin, a first compound, and a second compound different from the first compound, in which
the first compound and the second compound contain a group represented by General Formula (1) below, and
the number T₁ of triazine rings contained in the first compound and the number T₂ of triazine rings contained in the second compound satisfy T₁ < T₂, 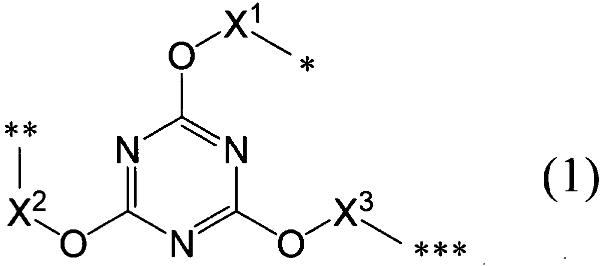 wherein, in General Formula (1), X¹, X², and X³ each independently represent an unsubstituted or substituted phenylene group, and *, **, and *** represent sites bonding to other atoms.

## Description

### TECHNICAL FIELD

The present invention relates to a resin composition, a molded article, a resin additive composition, a method for producing a resin composition, a method for improving crystallinity of a crystalline resin, and a material for resin additive composition.

### BACKGROUND ART

Various compounds are utilized as additives for improving the characteristics of synthetic resins. As the compounds utilized as additives for synthetic resins, Patent Document 1 proposes a compound containing a triaryloxy triazine skeleton, and discloses that this compound serves as a nucleating agent of synthetic resins, for example.

### RELATED ART DOCUMENT

### PATENT DOCUMENT

Patent Document 1: WO2020/067144

### SUMMARY OF THE INVENTION

### PROBLEMS TO BE SOLVED BY THE INVENTION

However, the compound described in Patent Document 1 has had room for further improvement in terms of the action for improving crystallinity of a crystalline resin.

Thus, it is an object of the present invention to provide a resin composition improved in crystallinity of a crystalline resin and a molded article thereof, a resin additive composition improving crystallinity of a crystalline resin, a method for producing a resin composition improved in crystallinity of a crystalline resin, a method for improving crystallinity of a crystalline resin, and a material for resin additive composition improving crystallinity of a crystalline resin.

### MEANS FOR SOLVING THE PROBLEMS

As a result of extensive research to solve the above-described problem, the present inventors have found that the above-described problem can be solved by combining a compound having a specific structure, and thus have completed the present invention.

More specifically, the present invention is a resin composition containing:
a crystalline resin;
a first compound; and
a second compound different from the first compound, in which
the first compound and the second compound contain a group represented by General Formula (1) below, and
the number T₁ of triazine rings contained in the first compound and the number T₂ of triazine rings contained in the second compound satisfy T₁ < T₂.

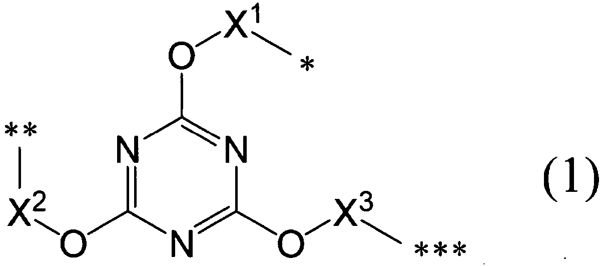

In General Formula (1), X¹, X², and X³ each independently represent an unsubstituted or substituted phenylene group, and *, **, and *** represent sites bonding to other atoms.

Further, the present invention is a molded article, which is obtained by molding the above-described resin composition.

Further, the present invention is a resin additive composition containing:
a first compound; and
a second compound different from the first compound, in which
the first compound and the second compound contain a group represented by General Formula (1) above, and
the number T₁ of triazine rings contained in the first compound and the number T₂ of triazine rings contained in the second compound satisfy T₁ < T₂.

Further, the present invention is a method for producing a resin composition including a blending step of blending:
a crystalline resin;
a first compound; and
a second compound different from the first compound, in which
the first compound and the second compound contain a group represented by General Formula (1) above, and
the number T₁ of triazine rings contained in the first compound and the number T₂ of triazine rings contained in the second compound satisfy T₁ < T₂.

Further, the present invention is a method for improving crystallinity of a crystalline resin including a blending step of blending:
a crystalline resin;
a first compound; and
a second compound different from the first compound, in which
the first compound and the second compound contain a group represented by General Formula (1) above, and
the number T₁ of triazine rings contained in the first compound and the number T₂ of triazine rings contained in the second compound satisfy T₁ < T₂.

Further, the present invention is a material for resin additive composition for use in combination with a second compound different from a first compound, the material containing
the first compound, in which
the first compound and the second compound contain a group represented by General Formula (1) above, and
the number T₁ of triazine rings contained in the first compound and the number T₂ of triazine rings contained in the second compound satisfy T₁ < T₂.

Further, the present invention is a material for resin additive composition for use in combination with a first compound, the material containing
a second compound different from the first compound, in which
the first compound and the second compound contain a group represented by General Formula (1) above, and
the number T₁ of triazine rings contained in the first compound and the number T₂ of triazine rings contained in the second compound satisfy T₁ < T₂.

### EFFECTS OF THE INVENTION

The present invention can provide a resin composition improved in crystallinity of a crystalline resin and a molded article thereof, a resin additive composition improving crystallinity of a crystalline resin, a method for producing a resin composition improved in crystallinity of a crystalline resin, a method for improving crystallinity of a crystalline resin, and a material for resin additive composition improving crystallinity of a crystalline resin.

### MODE FOR CARRYING OUT THE INVENTION

Hereinafter, embodiments of the present invention are described in detail.

First, a resin composition of this embodiment is described.

### <Resin composition>

The resin composition of this embodiment contains a crystalline resin, a first compound, and a second compound different from the first compound, in which the first compound and the second compound contain a group represented by General Formula (1) below, and the number T₁ of triazine rings contained in the first compound and the number T₂ of triazine rings contained in the second compound satisfy T₁ < T₂.

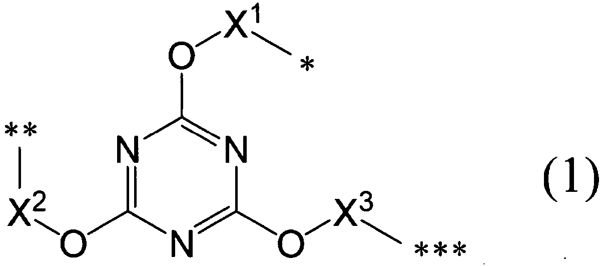

Herein, in General Formula (1), X¹, X², and X³ each independently represent an unsubstituted or substituted phenylene group, and *, **, and *** represent sites bonding to other atoms.

The resin composition of this embodiment is improved in crystallinity of the crystalline resin.

The reason why the crystallinity of the crystalline resin is improved in the resin composition of this embodiment is not exactly clear, but can be estimated as follows. More specifically, the first compound and the second compound both contain a triaryloxy triazine skeleton, and therefore each has an action of improving crystallinity of the crystalline resin alone. On the other hand, both the first compound and the second compound contain the triaryloxy triazine skeleton and have structures similar to each other, and therefore the first compound and the second compound can generate a cocrystal. Then, when the resin composition of this embodiment is cooled from a molten state, at least part of the first compound and at least part of the second compound form a cocrystal in the molten-state crystalline resin, and this cocrystal exhibits crystallinity improvement action stronger than that of the first compound alone or the second compound alone. Therefore, it is estimated that the resin composition of this embodiment is markedly improved in crystallinity of the crystalline resin.

The crystalline resin contained in the resin composition of this embodiment is not particularly limited. Examples of the crystalline resin include polyolefin resins, polyamide resins, polyester resins, polyacetal resins, polylactic acid, polyphenylene sulfide, and the like. The crystalline resins may be contained alone or in combination of two or more types thereof. The crystalline resin may also be a copolymer or a polymer alloy.

From the viewpoint of obtaining the resin composition further improved in crystallinity of the crystalline resin, the crystalline resin preferably contains polyolefin resins. Examples of the polyolefin resins include polyethylene resins, such as low-density polyethylene, linear low-density polyethylene, high-density polyethylene, cross-linked polyethylene, and ultra-high molecular weight polyethylene, polypropylene resins, such as homopolypropylene, random copolymer polypropylene, block copolymer polypropylene, impact copolymer polypropylene, high-impact copolymer polypropylene, and maleic anhydride-modified polypropylene, α-olefin polymers, such as polybutene-1, cycloolefin polymers, poly-3-methyl-1-butene, poly-3-methyl-1-pentene, and poly-4-methyl-1-pentene, α-olefin copolymers, such as ethylene-methyl methacrylate copolymers and ethylene-vinyl acetate copolymers, and the like. Herein, the molecular weight, the degree of polymerization, the density, the softening point, the proportion of insoluble matter in solvents, the degree of stereoregularity, presence or absence of catalyst residues, the type or the blending ratio of monomers serving as a raw material, the type of catalyst used in polymerization (e.g., Ziegler catalyst, metallocene catalyst, and the like), and the like of the polyolefin resins are not particularly limited and may be selected as appropriate.

From the viewpoint of obtaining the resin composition further improved in crystallinity of the crystalline resin, the crystalline resin more preferably contains at least one selected from the group consisting of polyethylene resins and polypropylene resins and still more preferably contains polypropylene resins in the resin composition of this embodiment. From the viewpoint of achieving more excellent transparency of a molded article containing the resin composition, the crystalline resin preferably contains random copolymer polypropylene in the resin composition of this embodiment.

The resin composition of this embodiment may contain resins other than the above-described crystalline resins as resin components in a range where the crystallinity improvement effect of the crystalline resin is not impaired. Examples of the resins other than the crystalline resins include amorphous thermoplastic resins, such as polycarbonate resins, styrene resins, acrylic resins, urethane resins, halogen-containing resins, petroleum resins, coumarone resins, polyvinyl alcohols, polyvinyl acetate, and polyphenylene oxide, thermosetting resins, such as phenol resins, urea resins, melamine resins, epoxy resins, unsaturated polyester resins, and synthetic rubbers, and the like. Herein, in the resin composition of this embodiment, the content ratio of the crystalline resin based on the total resin components contained in the resin composition is not particularly limited, and can be set to 5 to 100% by mass, for example. From the viewpoint of obtaining the resin composition further improved in crystallinity of the crystalline resin, the content ratio of the crystalline resin based on the total resin components contained in the resin composition is preferably 50 to 100% by mass, more preferably 80 to 100% by mass, still more preferably 90 to 100% by mass, even still more preferably 95 to 100% by mass, and particularly preferably 100% by mass.

The resin composition of this embodiment may contain elastomers as the resin components in a range where the crystallinity improvement effect of the crystalline resin is not impaired. In this case, the molded article containing the resin composition has excellent impact resistance. Herein, examples of the elastomers include synthetic rubbers, such as isoprene rubbers, butadiene rubbers, acrylonitrile-butadiene copolymer rubbers, styrene-butadiene copolymer rubbers, fluororubbers, and silicone rubbers, thermoplastic elastomers, such as polyolefin thermoplastic elastomers, polystyrene thermoplastic elastomers, polyvinyl chloride thermoplastic elastomers, polyurethane thermoplastic elastomers, polyester thermoplastic elastomers, and polyamide thermoplastic elastomers, and the like. Among the above, the thermoplastic elastomers are preferable from the viewpoint of achieving more excellent processability of the resin composition and further reducing the weight of the molded article containing the resin composition. Among the thermoplastic elastomers, polyolefin-based thermoplastic elastomers are particularly preferable. When the resin composition of this embodiment contains the elastomers, the content ratio of the elastomers based on the total resin components contained in the resin composition is not particularly limited and can be set to 1 to 50% by mass, for example, and, from the viewpoint of achieving both impact resistance and rigidity of the molded article containing the resin composition, is preferably 5 to 30% by mass and more preferably 10 to 25% by mass.

As described above, in the resin composition of this embodiment, the first compound and the second compound contain the group represented by General Formula (1) above.

Examples of substituents when X¹, X², and X³ are substituted phenylene groups include alkyl groups having 1 to 10 carbon atoms, alkoxy groups having 1 to 10 carbon atoms, alkylcarbonyl groups having 2 to 11 carbon atoms, aryl groups having 6 to 20 carbon atoms, aryloxy groups having 6 to 20 carbon atoms, arylcarbonyl groups having 7 to 21 carbon atoms, heterocyclic groups having 2 to 20 carbon atoms, amino groups, aminocarbonyl groups, halogen atoms, hydroxy groups, nitro groups, cyano groups, formyl groups, carboxy groups, sulfo groups, sulfonamide groups, and the like. Herein, the carboxyl groups and the sulfo groups may form salts. The substituents when X¹, X², and X³ are substituted phenylene groups are, from the viewpoint of obtaining the resin composition further improved in crystallinity of the crystalline resin, preferably alkyl groups having 1 to 10 carbon atoms, alkoxy groups having 1 to 10 carbon atoms, aryl groups having 6 to 20 carbon atoms, aryloxy groups having 6 to 20 carbon atoms, and halogen atoms, more preferably alkyl groups having 1 to 10 carbon atoms, aryl groups having 6 to 20 carbon atoms, and halogen atoms, and still more preferably alkyl groups having 1 to 10 carbon atoms and aryl groups having 6 to 20 carbon atoms. The number of the substituents when X¹, X², and X³ are substituted phenylene groups is not particularly limited and can be set to 1 to 4, and, from the viewpoint of obtaining the resin composition further improved in crystallinity of the crystalline resin, is preferably 1 to 2 and more preferably 1.

Examples of the alkyl groups having 1 to 10 carbon atoms include linear alkyl groups, such as methyl groups, ethyl groups, n-propyl groups, n-butyl groups, n-pentyl groups, n-hexyl groups, n-heptyl groups, n-octyl groups, n-nonyl groups, and n-decyl groups, branched alkyl groups, such as isopropyl groups, isobutyl groups, sec-butyl groups, tert-butyl groups, isopentyl groups, neopentyl groups, tert-amyl groups, 2-heptyl groups, tert-heptyl groups, tert-octyl groups, isononyl groups, and isodecyl groups, cyclic alkyl groups, such as cyclopentyl groups, cyclohexyl groups, cyclooctyl groups, and adamantyl groups, and the like. From the viewpoint of obtaining the resin composition further improved in crystallinity of the crystalline resin, methyl groups, ethyl groups, n-propyl groups, n-butyl groups, isopropyl groups, isobutyl groups, sec-butyl groups, tert-butyl groups, cyclopentyl groups, and cyclohexyl groups are preferable, methyl groups, ethyl groups, isopropyl groups, tert-butyl groups, and cyclohexyl groups are more preferable, methyl groups and cyclohexyl groups are still more preferable, and cyclohexyl groups are particularly preferable among the above.

The alkoxy groups having 1 to 10 carbon atoms include groups having a structure in which the above-described alkyl groups having 1 to 10 carbon atoms are bonded to oxygen atoms, for example.

The alkylcarbonyl groups having 2 to 11 carbon atoms include groups having a structure in which the above-described alkyl groups having 1 to 10 carbon atoms are bonded to carbonyl groups, for example.

Examples of the aryl groups having 6 to 20 carbon atoms include unsubstituted aryl groups, such as phenyl groups, o-biphenylyl groups, m-biphenylyl groups, p-biphenylyl groups, α-naphthyl groups, β-naphthyl groups, 1-anthryl groups, 2-anthryl groups, 9-anthryl groups, 1-phenanthryl groups, 2-phenanthryl groups, 3-phenanthryl groups, 4-phenanthryl groups, and 9-phenanthryl groups, substituted aryl groups, such as p-methylphenyl groups, o-methylphenyl groups, p-tert-butylphenyl groups, p-methoxyphenyl groups, p-chlorophenyl groups, p-nitrophenyl groups, and p-cyanophenyl groups, and the like. From the viewpoint of obtaining the resin composition further improved in crystallinity of the crystalline resin, unsubstituted aryl groups are preferable, and phenyl groups are more preferable among the above.

The aryloxy groups having 6 to 20 carbon atoms include groups having a structure in which the above-described aryl groups having 6 to 20 carbon atoms are bonded to oxygen atoms, for example.

The arylcarbonyl groups having 7 to 21 carbon atoms include groups having a structure in which the above-described aryl groups having 6 to 20 carbon atoms are bonded to carbonyl groups, for example.

Examples of the heterocyclic groups having 2 to 20 carbon atoms include pyridyl groups, pyrimidyl groups, furyl groups, thienyl groups, tetrahydrofuryl groups, dioxolanyl groups, benzoxazol-2-yl groups, tetrahydropyranyl groups, pyrrolidyl groups, imidazolidyl groups, pyrazolidyl groups, thiazolidyl groups, isothiazolidyl groups, oxazolidyl groups, isoxazolidyl groups, piperidyl groups, piperazyl groups, morpholinyl groups, and the like.

The amino group is a group having the -NY¹Y² structure. Herein, N is a nitrogen atom, and Y¹ and Y² each independently represent a hydrogen atom, an alkyl group having 1 to 10 carbon atoms, an aryl group having 6 to 20 carbon atoms, and the like. Y¹ and Y² may be coupled to form a ring. The alkyl groups having 1 to 10 carbon atoms and the aryl groups having 6 to 20 carbon atoms include the same as those exemplified above.

The aminocarbonyl groups include groups having a structure in which the above-described amino groups are bonded to carbonyl groups, for example.

The halogen atoms include fluorine, chlorine, bromine, iodine, and the like.

From the viewpoint of obtaining the resin composition further improved in crystallinity of the crystalline resin, X¹, X², and X³ are preferably unsubstituted phenylene groups.

As described above, in the resin composition of this embodiment, the number T₁ of triazine rings contained in the first compound and the number T₂ of triazine rings contained in the second compound satisfy T₁ < T₂. Herein, the value of T₂ - T₁ is not particularly limited, and can be set to an integer from 1 to 10, for example. From the viewpoint of obtaining the resin composition further improved in crystallinity of the crystalline resin, the value of T₂ - T₁ is preferably an integer from 1 to 5, more preferably an integer from 1 to 3, still more preferably an integer from 1 to 2, and particularly preferably 1. The value of T₁ is not particularly limited, and can be set to an integer from 1 to 10, for example. From the viewpoint of obtaining the resin composition further improved in crystallinity of the crystalline resin, the value of T₁ is preferably an integer from 1 to 5, more preferably an integer from 1 to 3, still more preferably an integer from 1 to 2, and particularly preferably 2. The value of T₂ is not particularly limited, and can be set to an integer from 2 to 11, for example. From the viewpoint of obtaining the resin composition further improved in crystallinity of the crystalline resin, the value of T₂ is preferably an integer from 2 to 8, more preferably an integer from 2 to 5, still more preferably an integer from 2 to 3, and particularly preferably 3.

In the resin composition of this embodiment, it is preferable that the first compound is a compound represented by General Formula (2) below and the second compound is a compound represented by General Formula (3) below.

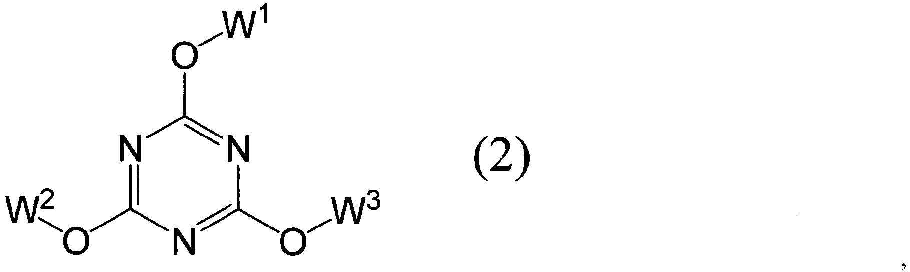

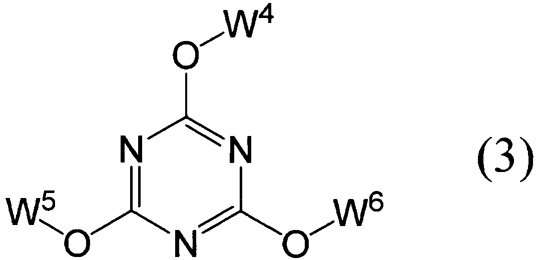

Herein, in General Formula (2) and General Formula (3), W¹ to W⁶ each independently represent a group represented by General Formula (4) below.

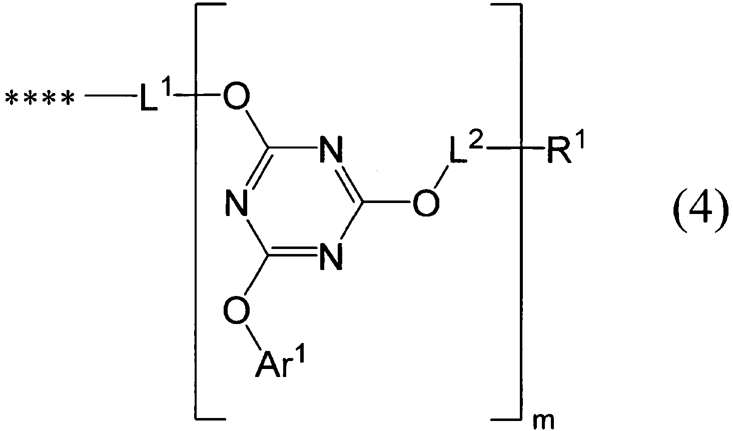

Herein, in General Formula (4), Ar¹ represents an unsubstituted or substituted phenyl group, R¹ represents a hydrogen atom or a monovalent substituent, L¹ and L² each independently represent a group represented by General Formula (5) below, m represents 0 or an integer of 1 or more, and **** represents a site bonding to an oxygen atom.

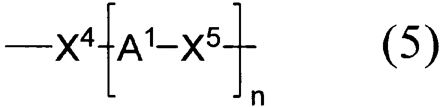

Herein, in General Formula (5), X⁴ and X⁵ each independently represent an unsubstituted or substituted phenylene group, A¹ represents a direct bonded or an unsubstituted or substituted alkanediyl group, and n represents 0 or 1.

The substituent when Ar¹ is a substituted phenyl group, the monovalent substituent represented by R¹, and the substituents when X⁴ and X⁵ are substituted phenylene groups include the same as those described above as the substituents when X¹, X², and X³ are substituted phenylene groups.

From the viewpoint of obtaining the resin composition further improved in crystallinity of the crystalline resin, the substituent when Ar¹ is a substituted phenyl group is preferably an alkyl group having 1 to 10 carbon atoms, an alkoxy group having 1 to 10 carbon atoms, an aryl group having 6 to 20 carbon atoms, an aryloxy group having 6 to 20 carbon atoms, or a halogen atom, more preferably an alkyl group having 1 to 10 carbon atoms, an aryl group having 6 to 20 carbon atoms, or a halogen atom, and still more preferably an alkyl group having 1 to 10 carbon atoms or an aryl group having 6 to 20 carbon atoms. When Ar¹ is a substituted phenyl group, the number of the substituents is not particularly limited and can be set to 1 to 5, and, from the viewpoint of obtaining the resin composition further improved in crystallinity of the crystalline resin, the number of the substituents is preferably 1 to 3, more preferably 1 to 2, and still more preferably 1. When the number of the substituents is 1, the position of the substituent is not particularly limited and can be set to any of the o-position, the m-position, and the p-position. However, from the viewpoint of obtaining the resin composition further improved in crystallinity of the crystalline resin, the position of the substituent is preferably the p-position.

From the viewpoint of obtaining the resin composition further improved in crystallinity of the crystalline resin, R¹ is preferably a hydrogen atom, an alkyl group having 1 to 10 carbon atoms, an alkoxy group having 1 to 10 carbon atoms, an aryl group having 6 to 20 carbon atoms, an aryloxy group having 6 to 20 carbon atoms, or a halogen atom, more preferably a hydrogen atom, an alkyl group having 1 to 10 carbon atoms, an aryl group having 6 to 20 carbon atoms, or a halogen atom, still more preferably an alkyl group having 1 to 10 carbon atoms, an aryl group having 6 to 20 carbon atoms, or a halogen atom, and even still more preferably an alkyl group having 1 to 10 carbon atoms or an aryl group having 6 to 20 carbon atoms.

From the viewpoint of obtaining the resin composition further improved in crystallinity of the crystalline resin, the substituents when X⁴ and X⁵ are substituted phenylene groups are preferably alkyl groups having 1 to 10 carbon atoms, alkoxy groups having 1 to 10 carbon atoms, aryl groups having 6 to 20 carbon atoms, aryloxy groups having 6 to 20 carbon atoms, and halogen atoms, more preferably alkyl groups having 1 to 10 carbon atoms, aryl groups having 6 to 20 carbon atoms, and halogen atoms, and still more preferably alkyl groups having 1 to 10 carbon atoms and aryl groups having 6 to 20 carbon atoms. The number of the substituents when X⁴ and X⁵ are substituted phenylene groups is not particularly limited and can be set to 1 to 4, and, from the viewpoint of obtaining the resin composition further improved in crystallinity of the crystalline resin, is preferably 1 to 2 and more preferably 1.

From the viewpoint of obtaining the resin composition further improved in crystallinity of the crystalline resin, X⁴ and X⁵ are preferably unsubstituted phenylene groups.

Examples of the alkanediyl group represented by A¹ include alkylene groups, such as methylene groups, ethylene groups, propylene groups, and butylene groups, alkylidene groups, such as ethylidene groups, propane-1-ylidene groups, propane-2-ylidene groups, butane-1-ylidene groups, butane-2-ylidene groups, and cyclohexylidene groups, and the like. Herein, the number of carbon atoms of the alkanediyl groups can be set to 1 to 10, for example, and, from the viewpoint of obtaining the resin composition further improved in crystallinity of the crystalline resin, is preferably 1 to 6 and more preferably 1 to 3. From the same viewpoint, the alkanediyl group represented by A¹ is preferably a methylene group, an ethylene group, a propylene group, a butylene group, an ethylidene group, a propane-1-ylidene group, a propane-2-ylidene group, a butane-1-ylidene group, a butane-2-ylidene group, or a cyclohexylidene group, more preferably a methylene group, an ethylene group, a propylene group, an ethylidene group, a propane-1-ylidene group, or a propane-2-ylidene group, and still more preferably a methylene group or a propane-2-ylidene group. The substituent when the alkanediyl group is substituted include the same as those described above as the substituents when X¹, X², and X³ are substituted phenylene groups.

In the resin composition of this embodiment, A¹ is preferably a direct bond from the viewpoint of obtaining the resin composition further improved in crystallinity of the crystalline resin.

The value of m can be set to 0 or an integer from 1 to 100, for example. From the viewpoint of obtaining the resin composition further improved in crystallinity of the crystalline resin, the value of m is preferably 0 or an integer from 1 to 5, more preferably 0 or an integer from 1 to 2, and still more preferably 0 or 1.

In the resin composition of this embodiment, from the viewpoint of obtaining the resin composition further improved in crystallinity of the crystalline resin, it is preferable that W¹ is a group in which m is 1 in General Formula (4) and that W² and W³ are each independently a group in which m is 0 in General Formula (4). More specifically, when the value of T₁ is 2, the first compound is preferably a compound represented by General Formula (2') below.

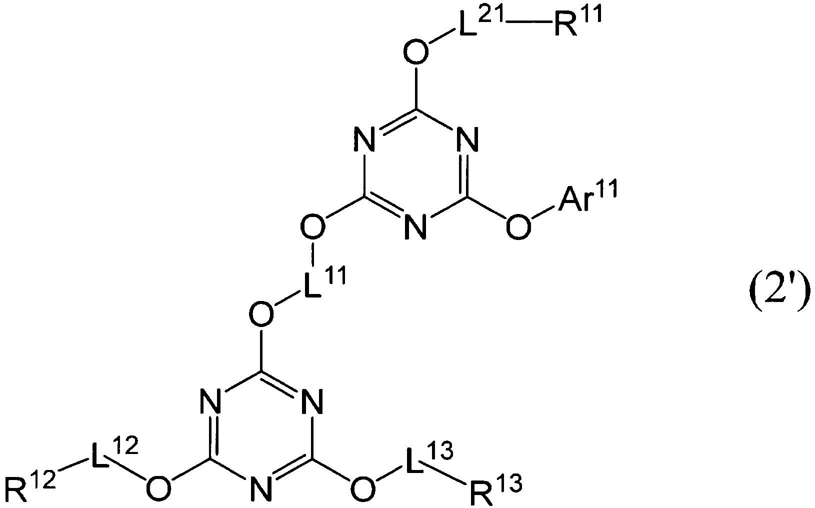

Herein, in General Formula (2'), L¹¹, L¹², L¹³, and L²¹ each independently represent a group represented by General Formula (5) above, R¹¹, R¹², and R¹³ each independently represent a hydrogen atom or a monovalent substituent, and Ar¹¹ represents an unsubstituted or substituted phenyl group.

The monovalent substituents represented by R¹¹, R¹², and R¹³ and the substituent when Ar¹¹ is a substituted phenyl group include the same as those described above as the substituents when X¹, X², and X³ are substituted phenylene groups.

From the viewpoint of obtaining the resin composition further improved in crystallinity of the crystalline resin, the substituent when Ar¹¹ is a substituted phenyl group is preferably an alkyl group having 1 to 10 carbon atoms, an alkoxy group having 1 to 10 carbon atoms, an aryl group having 6 to 20 carbon atoms, an aryloxy group having 6 to 20 carbon atoms, or a halogen atom, more preferably an alkyl group having 1 to 10 carbon atoms, an aryl group having 6 to 20 carbon atoms, or a halogen atom, and still more preferably an alkyl group having 1 to 10 carbon atoms or an aryl group having 6 to 20 carbon atoms. When Ar¹¹ is a substituted phenyl group, the number of the substituents is not particularly limited and can be set to 1 to 5, and, from the viewpoint of obtaining the resin composition further improved in crystallinity of the crystalline resin, the number of the substituents is preferably 1 to 3, more preferably 1 to 2, and still more preferably 1. When the number of the substituents is 1, the position of the substituent is not particularly limited and can be set to any of the o-position, the m-position, or the p-position. However, from the viewpoint of obtaining the resin composition further improved in crystallinity of the crystalline resin, the position of the substituent is preferably the p-position.

From the viewpoint of obtaining the resin composition further improved in crystallinity of the crystalline resin, R¹¹, R¹², and R¹³ each are preferably a hydrogen atom, an alkyl group having 1 to 10 carbon atoms, an alkoxy group having 1 to 10 carbon atoms, an aryl group having 6 to 20 carbon atoms, an aryloxy group having 6 to 20 carbon atoms, or a halogen atom, more preferably a hydrogen atom, an alkyl group having 1 to 10 carbon atoms, an aryl group having 6 to 20 carbon atoms, or a halogen atom, still more preferably an alkyl group having 1 to 10 carbon atoms, an aryl group having 6 to 20 carbon atoms, or a halogen atom, and even still more preferably an alkyl group having 1 to 10 carbon atoms or an aryl group having 6 to 20 carbon atoms.

From the viewpoint of obtaining the resin composition further improved in crystallinity of the crystalline resin, in the groups represented by General Formula (5) above represented by L¹¹, L¹², L¹³, and L²¹, X⁴ and X⁵ are preferably unsubstituted phenylene groups. From the same viewpoint, in the groups represented by General Formula (5) above represented by L¹¹, L¹², L¹³, and L²¹, A¹ is preferably a direct bond.

In the resin composition of this embodiment, from the viewpoint of obtaining the resin composition further improved in crystallinity of the crystalline resin, it is preferable that W⁴ and W⁵ each are independently a group in which m is 1 in General Formula (4) and that W⁶ is a group in which m is 0 in General Formula (4). More specifically, when the value of T₂ is 3, the second compound is preferably a compound represented by General Formula (3') below.

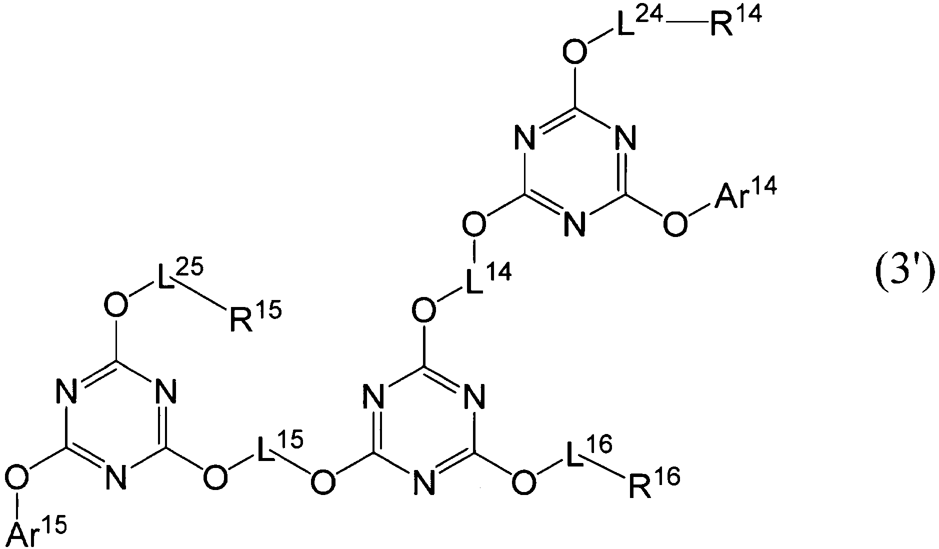

Herein, in General Formula (3'), L¹⁴, L¹⁵, L¹⁶, L²⁴, and L²⁵ each independently represent a group represented by General Formula (5) above, R¹⁴, R¹⁵, and R¹⁶ each independently represent a hydrogen atom or a monovalent substituent, and Ar¹⁴ and Ar¹⁵ each independently represent an unsubstituted or substituted phenyl group.

The monovalent substituents represented by R¹⁴, R¹⁵, and R¹⁶ and the substituents when Ar¹⁴ and Ar¹⁵ are substituted phenyl groups include the same as those described above as the substituents when X¹, X², and X³ are substituted phenylene groups.

From the viewpoint of obtaining the resin composition further improved in crystallinity of the crystalline resin, the substituents when Ar¹⁴ and Ar¹⁵ are substituted phenyl groups each are preferably alkyl groups having 1 to 10 carbon atoms, alkoxy groups having 1 to 10 carbon atoms, aryl groups having 6 to 20 carbon atoms, aryloxy groups having 6 to 20 carbon atoms, and halogen atoms, more preferably alkyl groups having 1 to 10 carbon atoms, aryl groups having 6 to 20 carbon atoms, and halogen atoms, and still more preferably alkyl groups having 1 to 10 carbon atoms and aryl groups having 6 to 20 carbon atoms. When Ar¹⁴ and Ar¹⁵ are substituted phenyl groups, the number of the substituents is not particularly limited and can be set to 1 to 5, and, from the viewpoint of obtaining the resin composition further improved in crystallinity of the crystalline resin, the number of the substituents is preferably 1 to 3, more preferably 1 to 2, and still more preferably 1. When the number of the substituents is 1, the position of the substituent is not particularly limited and can be set to any of the o-position, the m-position, or the p-position. However, from the viewpoint of obtaining the resin composition further improved in crystallinity of the crystalline resin, the position of the substituent is preferably the p-position.

From the viewpoint of obtaining the resin composition further improved in crystallinity of the crystalline resin, R¹⁴, R¹⁵, and R¹⁶ each are preferably a hydrogen atom, an alkyl group having 1 to 10 carbon atoms, an alkoxy group having 1 to 10 carbon atoms, an aryl group having 6 to 20 carbon atoms, an aryloxy group having 6 to 20 carbon atoms, or a halogen atom, more preferably a hydrogen atom, an alkyl group having 1 to 10 carbon atoms, an aryl group having 6 to 20 carbon atoms, or a halogen atom, and still more preferably an alkyl group having 1 to 10 carbon atoms, an aryl group having 6 to 20 carbon atoms, or a halogen atom, and even still more preferably an alkyl group having 1 to 10 carbon atoms or aryl group having 6 to 20 carbon atoms.

From the viewpoint of obtaining the resin composition further improved in crystallinity of the crystalline resin, in the groups represented by General Formula (5) above represented by L¹⁴, L¹⁵, L¹⁶, L²⁴, and L²⁵, X⁴ and X⁵ are preferably unsubstituted phenylene groups. From the same viewpoint, in the groups represented by General Formula (5) above represented by L¹⁴, L¹⁵, L¹⁶, L²⁴, and L²⁵, A¹ is preferably a direct bond.

In the resin composition of this embodiment, from the viewpoint of obtaining the resin composition further improved in crystallinity of the crystalline resin, it is preferable that the first compound is the compound represented by General Formula (2') above and the second compound is the compound represented by General Formula (3') below.

Specific examples of the first compound include the following compounds No. 1 to No. 38, for example, but the first compound is not limited to the following compounds.

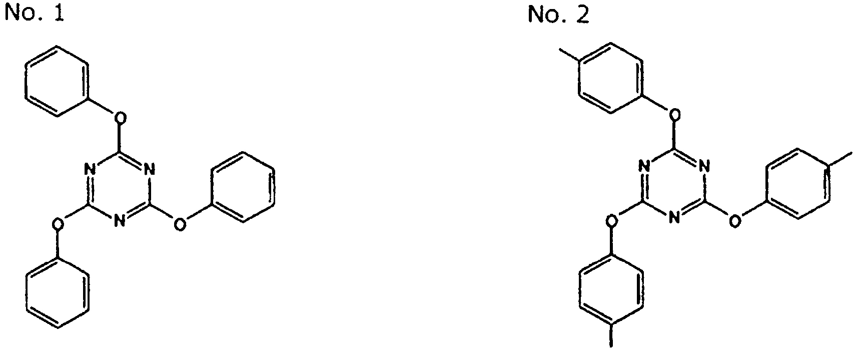

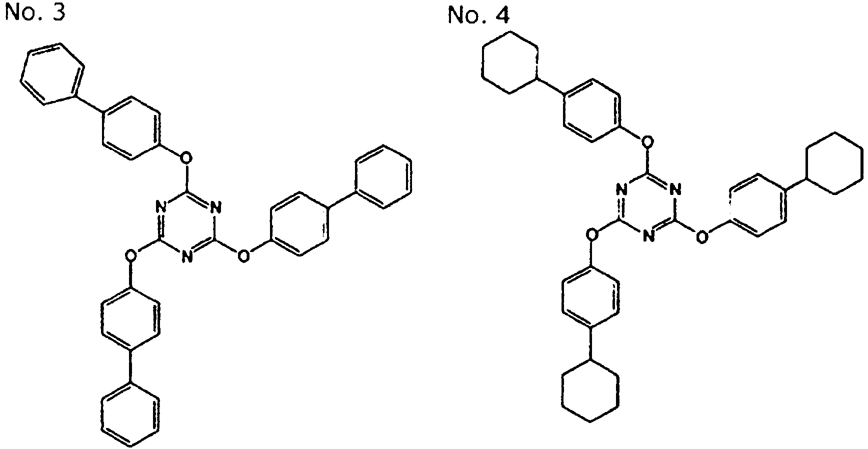

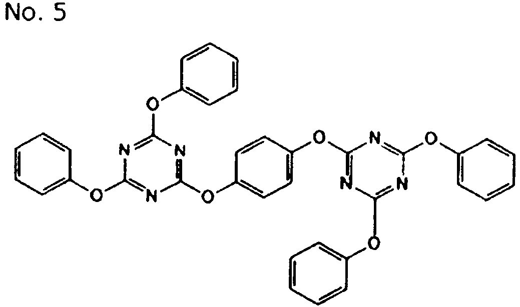

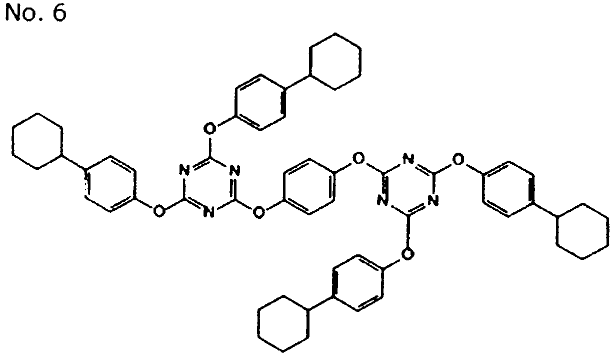

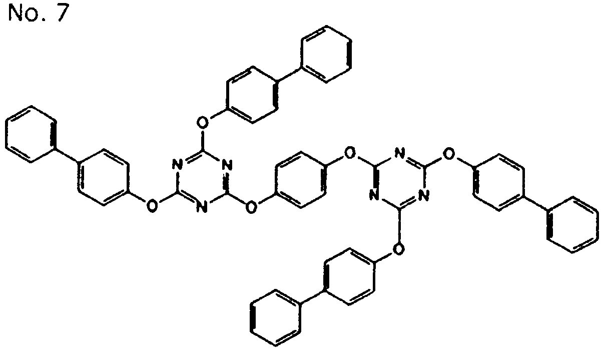

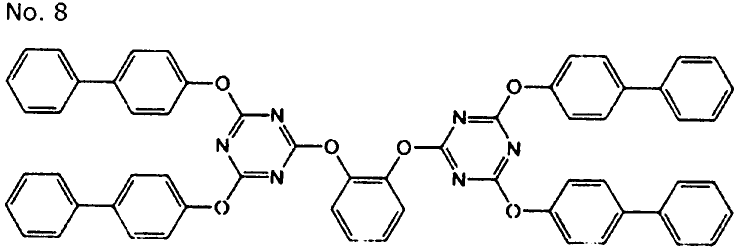

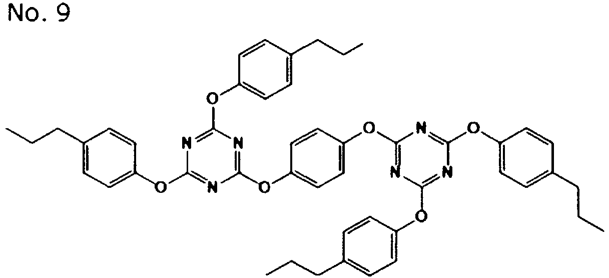

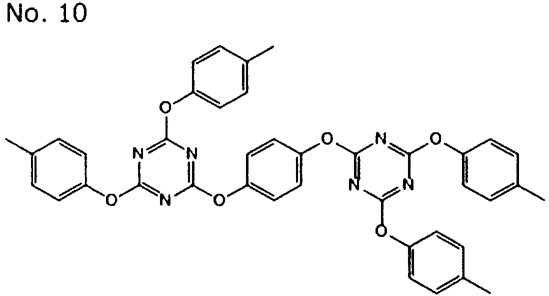

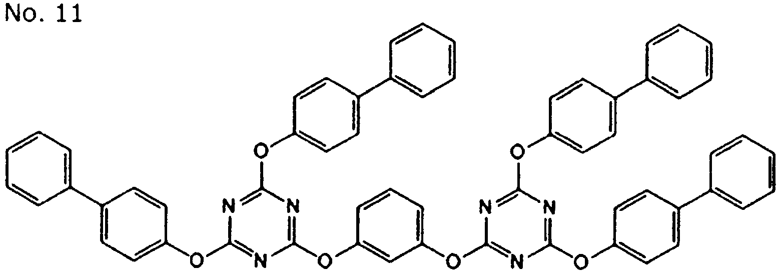

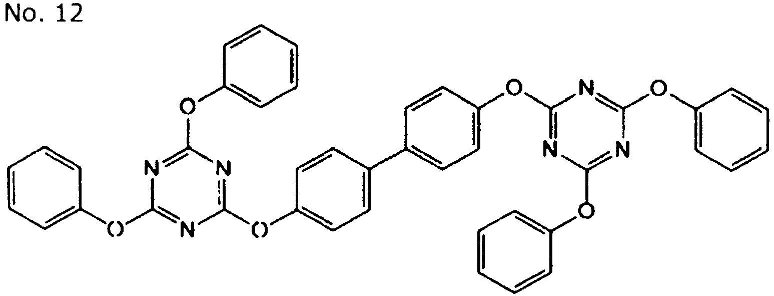

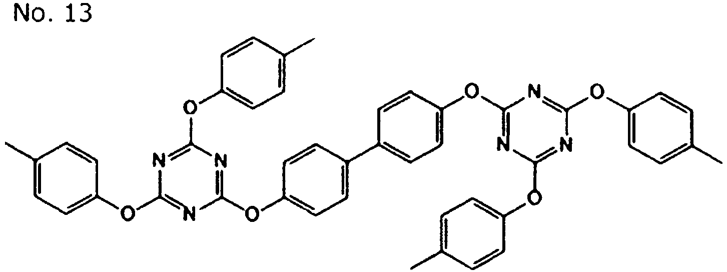

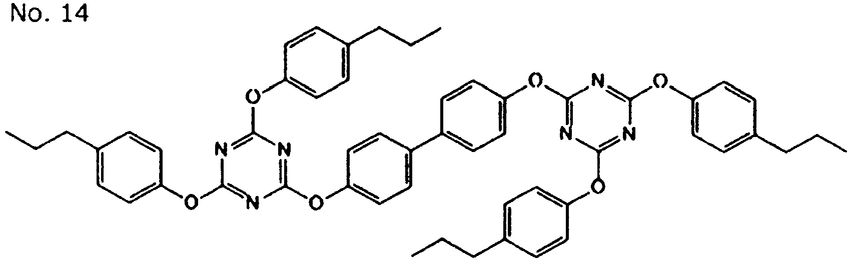

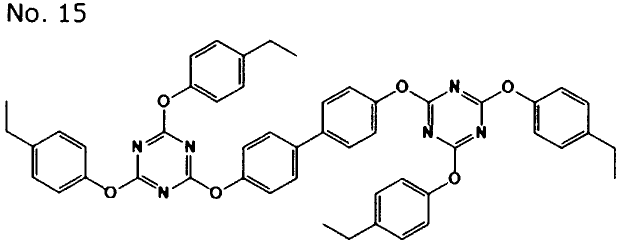

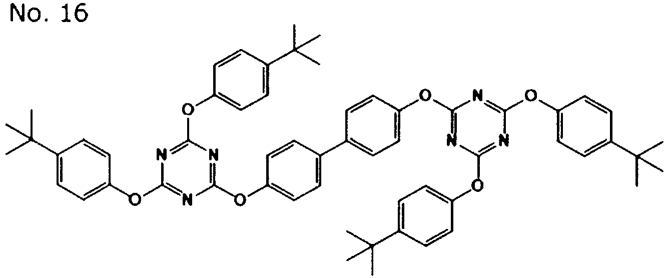

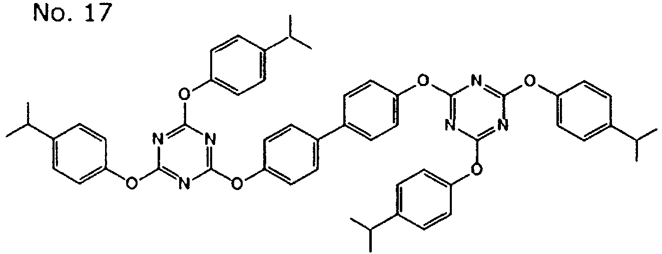

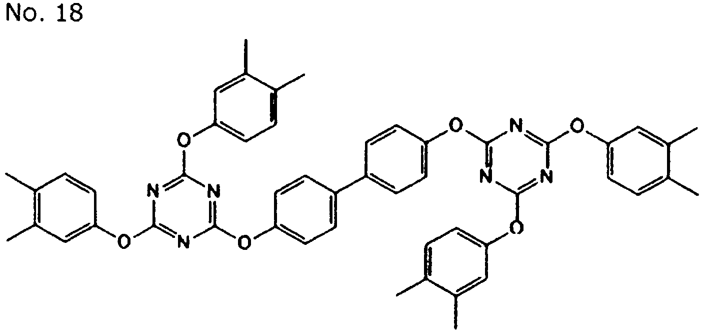

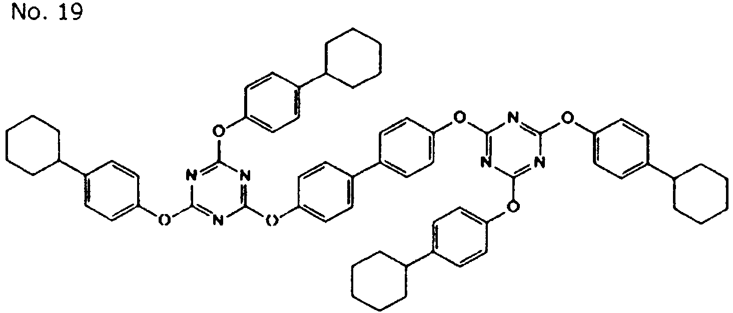

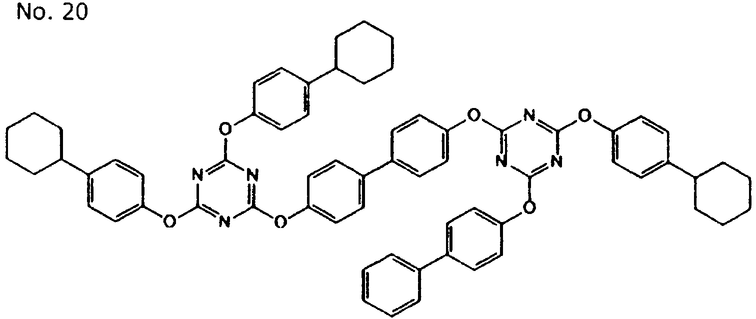

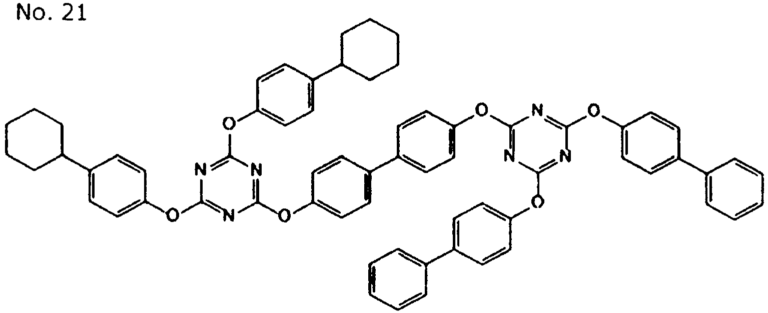

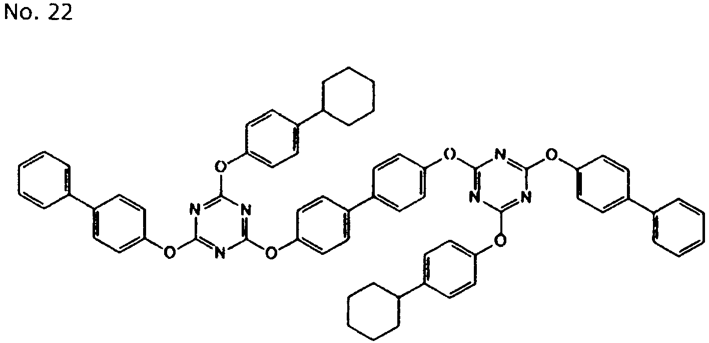

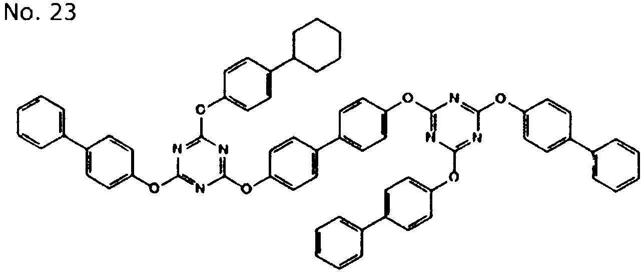

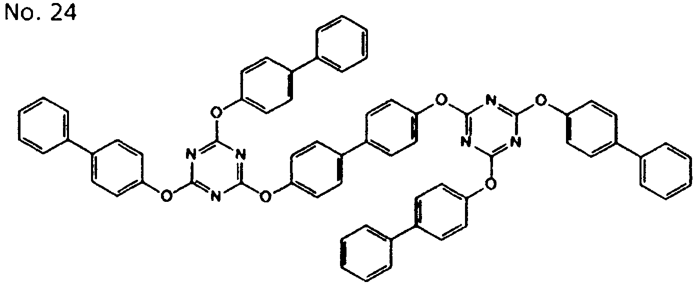

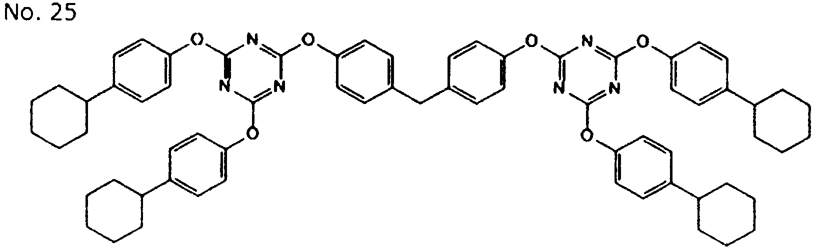

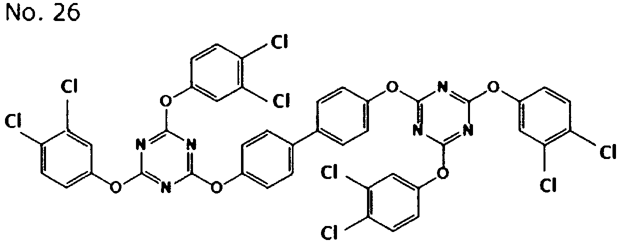

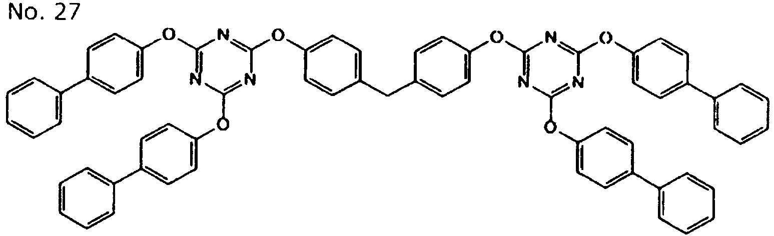

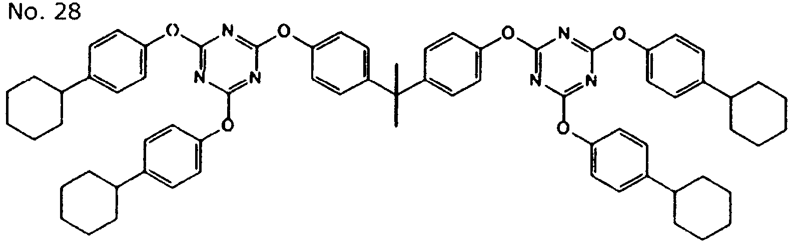

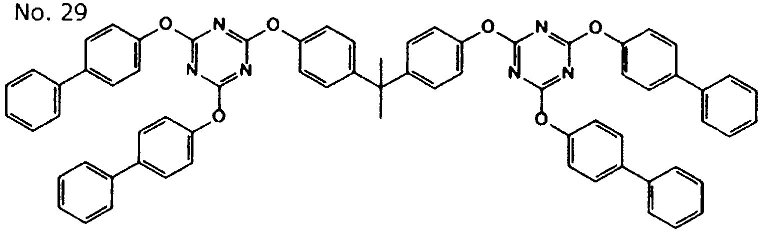

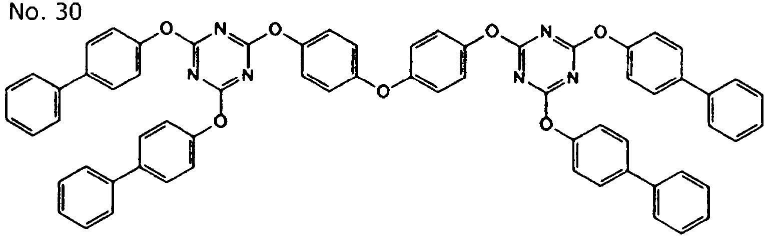

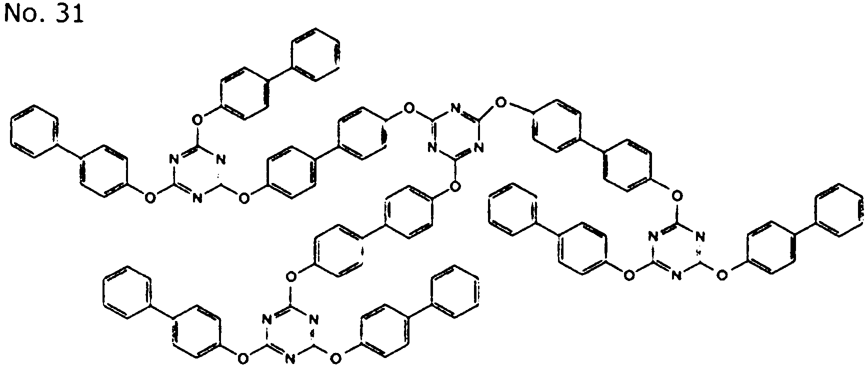

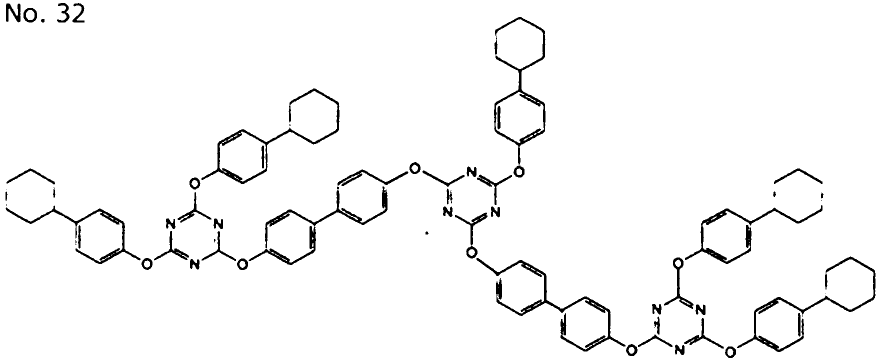

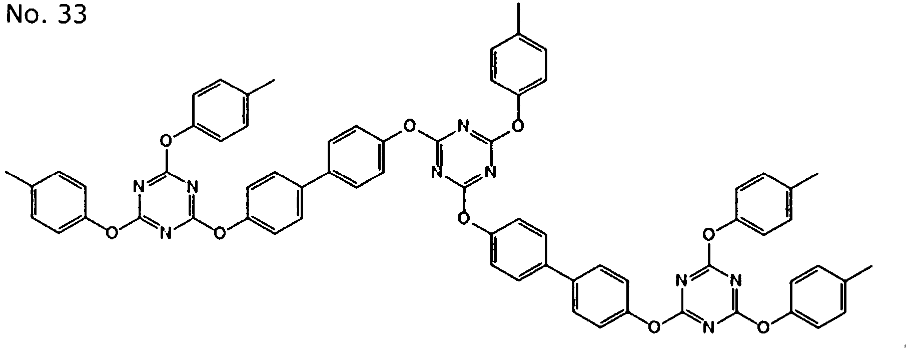

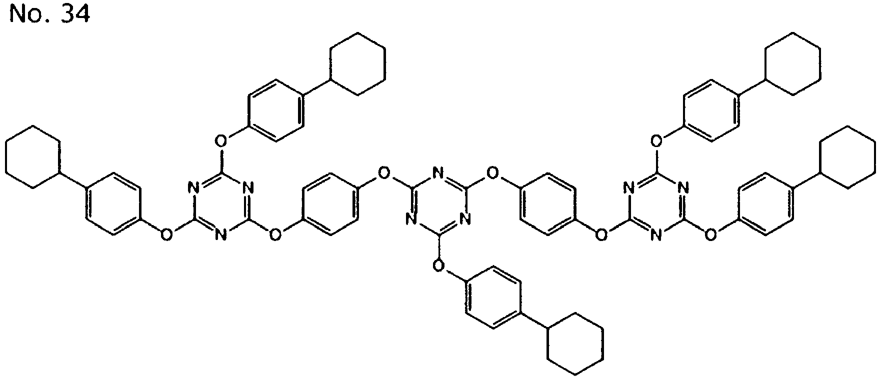

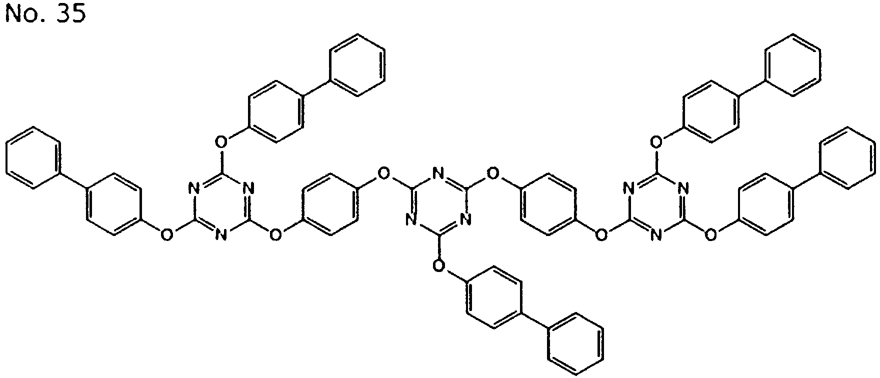

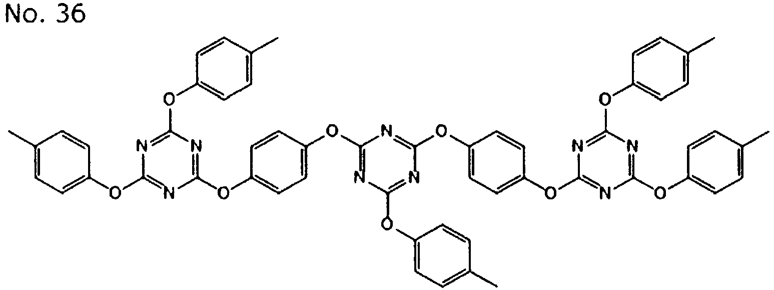

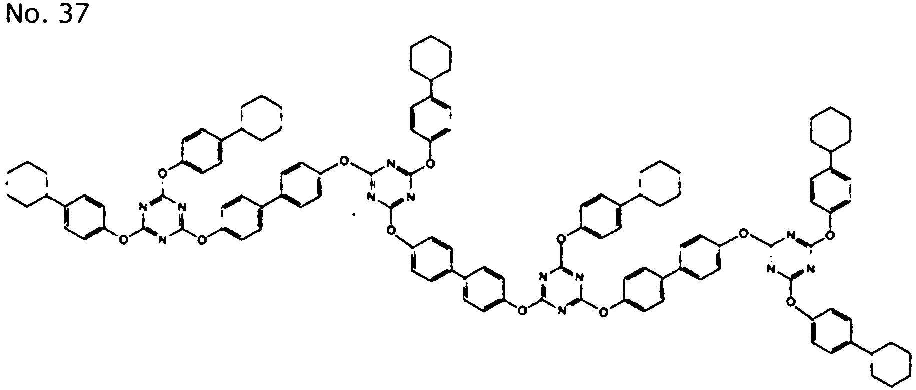

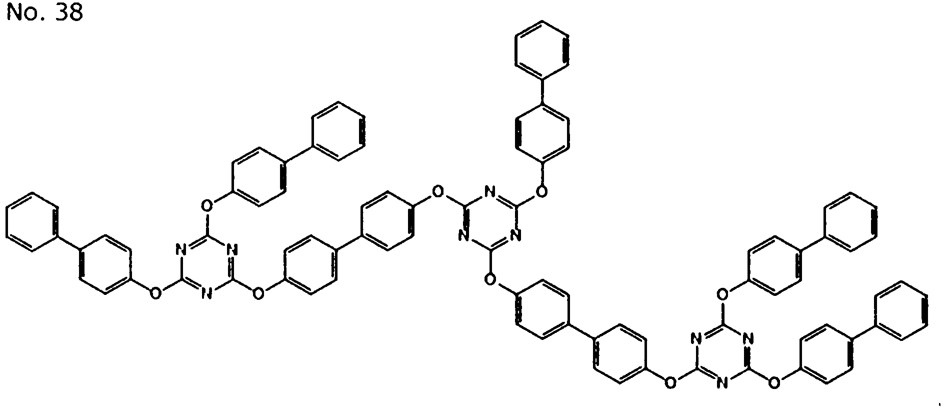

From the viewpoint of obtaining the resin composition further improved in crystallinity of the crystalline resin, the first compound is preferably any of the compounds No. 1 to No. 30, more preferably any of the compounds No. 5 to No. 30, still more preferably the compound No. 6, the compound No. 7, any of the compounds No. 12 to No. 17, or any of the compounds No. 19 to No. 24, and even still more preferably the compound No. 6, the compound No. 13, the compound No. 19, or the compound No. 24.

Specific examples of the second compound include the compounds No. 5 to No. 38 and the like, for example, but the second compound is not limited thereto.

From the viewpoint of obtaining the resin composition further improved in crystallinity of the crystalline resin, the second compound is preferably any of the compounds No. 31 to No. 38, more preferably any of the compounds No. 32 to No. 36 or the compound No. 38, and still more preferably the compound No. 32, the compound No. 33, the compound No. 34, or the compound No. 38.

In the resin composition of this embodiment, the first compound can be set to any of the compounds No. 1 to No. 38 and the second compound can be set to any of the compounds No. 5 to No. 38. From the viewpoint of obtaining the resin composition further improved in crystallinity of the crystalline resin, in the resin composition of this embodiment, it is preferable that the first compound is any of the compounds No. 1 to No. 30 and the second compound is any of the compounds No. 31 to No. 38, it is more preferable that the first compound is any of the compounds No. 5 to No. 30 and the second compound is any of the compounds No. 32 to No. 36 or No. 38, it is still more preferable that the first compound is the compound No. 6, the compound No. 7, any of the compounds No. 12 to No. 17, or any of the compounds No. 19 to No. 24 and the second compound is the compound No. 32, the compound No. 33, the compound No. 34, or the compound No. 38, and it is even still more preferable that the first compound is the compound No. 6, the compound No. 13, the compound No. 19, or the compound No. 24 and the second compound is the compound No. 32, the compound No. 33, the compound No. 34, or the compound No. 38.

The first compound and the second compound can be produced by known methods, such as the methods described in WO2020/067144 and WO2022/039224, for example.

In the resin composition of this embodiment, the total of the content of the first compound and the content of the second compound can be set to 0.001 to 10 parts by mass based on 100 parts by mass of the crystalline resin, for example. From the viewpoint of obtaining the resin composition further improved in crystallinity of the crystalline resin and from the viewpoint of sufficiently suppressing the occurrence of bloom, the total of the content of the first compound and the content of the second compound is preferably 0.002 to 5 parts by mass, more preferably 0.003 to 3 parts by mass, still more preferably 0.005 to 1 part by mass, even still more preferably 0.01 to 0.5 parts by mass, yet even still more preferably 0.02 to 0.2 parts by mass, and particularly preferably 0.03 to 0.1 parts by mass based on 100 parts by mass of the crystalline resin. In the resin composition of this embodiment, the content of the first compound can be set to 0.0009 to 9.9999 parts by mass based on 100 parts by mass of the crystalline resin, for example. From the viewpoint of obtaining the resin composition further improved in crystallinity of the crystalline resin and from the viewpoint of sufficiently suppressing the occurrence of bloom, the content of the first compound is preferably 0.002 to 5 parts by mass, more preferably 0.003 to 3 parts by mass, still more preferably 0.005 to 1 part by mass, still more preferably 0.01 to 0.5 parts by mass, even still more preferably 0.025 to 0.2 parts by mass, and particularly preferably 0.03 to 0.1 parts by mass based on 100 parts by mass of the crystalline resin. In the resin composition of this embodiment, the content of the second compound can be set to 0.0001 to 1 part by mass based on 100 parts by mass of the crystalline resin, for example. From the viewpoint of obtaining the resin composition further improved in crystallinity of the crystalline resin and from the viewpoint of sufficiently suppressing the occurrence of bloom, the content of the second compound is preferably 0.0002 to 0.5 parts by mass, more preferably 0.0003 to 0.2 parts by mass, still more preferably 0.0005 to 0.1 parts by mass, even still more preferably 0.0008 to 0.05 parts by mass, yet even still more preferably 0.001 to 0.03 parts by mass, and particularly preferably 0.002 to 0.01 parts by mass based on 100 parts by mass of the crystalline resin.

In the resin composition of this embodiment, the content of the second compound can be set to 0.1 to 10000 parts by mass based on the content of the first compound of 100 parts by mass, for example. From the viewpoint of obtaining the resin composition further improved in crystallinity of the crystalline resin, the content of the second compound is preferably 0.5 to 1000 parts by mass, more preferably 1 to 100 parts by mass, still more preferably 2 to 50 parts by mass, and even still more preferably 3 to 10 parts by mass based on the content of the first compound of 100 parts by mass, for example.

The resin composition of this embodiment may further contain compounds containing the group represented by General Formula (1) above other than the first compound and the second compound described above in a range where the crystallinity improvement effect of the crystalline resin is not impaired. The resin composition of this embodiment may further contain one type or two or more types among those, which are additives, such as nucleating agents, phenolic antioxidants, phosphorus-based antioxidants, sulfur-based antioxidants, other antioxidants, hindered amine compounds, ultraviolet absorbers, fatty acid metal salts, flame retardants, flame retardant aids, fillers, lubricants, hydrotalcites, antistatic agents, fluorescent whitening agents, and colorants, other than the compounds containing the group represented by General Formula (1) above (hereinafter referred to as "other additives") in a range where the crystallinity improvement effect of the crystalline resin is not impaired.

Examples of the nucleating agents include aromatic phosphate metal salts, such as sodium 2,2'-methylenebis(4,6-di-tert-butylphenyl)phosphate, lithium 2,2'-methylenebis(4,6-di-tert-butylphenyl)phosphate, dihydroxy aluminum 2,2'-methylenebis(4,6-di-tert-butylphenyl)phosphate, and hydroxy aluminum bis[2,2'-methylenebis(4,6-di-tert-butylphenyl)phosphate], carboxylic acid metal salts, such as sodium benzoate, 4-*tert-*butylbenzoate aluminum salt, sodium adipate, disodium bicyclo[2.2.1]heptane-2,3-dicarboxylate, calcium cyclohexane-1,2-dicarboxylate, amide compounds, such as N,N',N"-tris[2-methylcyclohexyl]-1,2,3-propane tricarboxamide, N,N',N"-tricyclohexyl-1,3,5-benzene tricarboxamide, N,N'-dicyclohexylnaphthalene dicarboxamide, and 1,3,5-tris[(2,2-dimethylpropanoylamino)]benzene, diacetal compounds, such as dibenzylidene sorbitol, bis(p-methylbenzylidene)sorbitol, bis(p-ethylbenzylidene)sorbitol, bis(3,4-methylbenzylidene)sorbitol, and 1,2,3-trideoxy-4,6:5,7-o-bis (4-propylbenzylidene)nonitol, and the like.

Examples of the phenolic antioxidants include 3-(3,5-dialkyl-4-hydroxyphenyl) propionic acid derivatives, such as 2,6-di-tert-butyl-4-ethyl phenol, 2-tert-butyl-4,6-dimethylphenol, styrenated phenol, 2,2'-methylenebis(4-ethyl-6-tert-butylphenol), 2,2'-thiobis-(6-tert-butyl-4-methylphenol), 2,2'-thiodiethylenebis[3-(3,5-di-tert-butyl-4-hydroxyphenyl)propionate], 2-methyl-4,6-bis(octylsulfanyl methyl)phenol, 2,2'-isobutylidenebis(4,6-dimethylphenol), isooctyl-3-(3,5-di-tert-butyl-4-hydroxyphenyl)propionate, N,N'-hexane-1,6-diylbis[3-(3,5-di-tert-butyl-4-hydroxyphenyl)propionamide], 2,2'-oxamido-bis[ethyl-3-(3,5-di-tert-butyl-4-hydroxyphenyl)propionate], 2-ethyl hexyl-3-(3',5'-di-tert-butyl-4'-hydroxyphenyl)propionate, 2,2'-ethylenebis(4,6-di-tert-butylphenol), esters of 3,5-di-tert-butyl-4-hydroxybenzene propanoic acid and C13-15 alkyl, 2,5-di-tert-amylhydroquinone, hindered phenol polymers (manufactured by ADEKA POLYMER ADDITIVES EUROPE SAS, trade name "AO.OH.98"), 2,2'-methylenebis[6-(1-methylcyclohexyl)-p-cresol], 2-tert-butyl-6-(3-tert-butyl-2-hydroxy 5-methylbenzyl)-4-methylphenylacrylate, 2-[1-(2-hydroxy-3,5-di-tert-pentylphenyl)ethyl]-4,6-di-tert-pentylphenylacrylate, 6-[3-(3-tert-butyl-4-hydroxy-5-methyl)propoxy]-2,4,8,10-tetra-tert-butylbenz[d,f][1,3,2]-dioxaphosphobin, hexamethylenebis[3-(3,5-di-tert-butyl-4-hydroxyphenyl)propionate], bis[monoethyl(3,5-di-tert-butyl-4-hydroxybenzyl)phosphonate]calcium salt, a reaction product of 5,7-bis(1,1-di methylethyl)-3-hydroxy-2(3H)-benzofuranone and o-xylene, 2,6-di-tert-butyl-4-(4,6-bis(octylthio)-1,3,5-triazine-2-ylamino)phenol, DL-a-tocopherol (vitamin E), 2,6-bis(α-methylbenzyl)-4-methylphenol, bis[3,3-bis-(4'-hydroxy-3'-tert-butyl-phenyl)butanoic acid]glycol ester, 2,6-di-tert-butyl-p-cresol, 2,6-diphenyl-4-octadecyloxyphenol, stearyl(3,5-di-tert-butyl-4-hydroxyphenyl)propionate, distearyl(3,5-di-tert-butyl-4-hydroxybenzyl)phosphonate, tridecyl-3,5-tert-butyl-4-hydroxybenzylthioacetate, thiodiethylenebis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazine, 2,2'-methylenebis(4-methyl-6-tert-butylphenol), bis[3,3-bis(4-hydroxy-3-tert-butylphenyl)butyric acid]glycol ester, 4,4'-butylidenebis(2,6-di-tertbutylphenol), 4,4'-butylidenebis(6-tert-butyl-3-methylphenol), 2,2'-ethylidenebis(4,6-di-tertbutylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3',5'-di-tert-butyl-4'-hydroxyphenyl)propionate]methane, 2-tert-butyl-4-methyl-6-(2-acryloyloxy-3-tert-butyl-5-methylbenzyl)phenol, 3,9-bis[2-(3-tert-butyl-4-hydroxy-5-methylhydrocinnamoyloxy)-1,1-dimethylethyl]-2,4,8,10-tetraoxaspiro[5.5]undecane, triethylene glycol bis[β-(3-tert-butyl-4-hydroxy-5-methylphenyl)propionate], stearyl-3-(3,5-di-tert-butyl-4-hydroxyphenyl)propionic acid amide, palmityl-3-(3,5-di-tert-butyl-4-hydroxyphenyl)propionic acid amide, myristyl-3-(3,5-di-tert-butyl-4-hydroxyphenyl)propionic acid amide, and lauryl-3-(3,5-di-tert-butyl-4-hydroxyphenyl) propionic acid amide, and the like.

Examples of the phosphorus-based antioxidants include triphenyl phosphite, diisooctyl phosphite, heptakis(dipropyleneglycol)triphosphite, triisodecyl phosphite, diphenyl isooctyl phosphite, diisooctyl phenyl phosphite, diphenyl tridecyl phosphite, triisooctyl phosphite, trilauryl phosphite, diphenyl phosphite, tris(dipropyleneglycol)phosphite, dioleyl hydrogen phosphite, trilauryl trithiophosphite, bis(tridecyl)phosphite, tris(isodecyl)phosphite, tris(tridecyl)phosphite, diphenyldecyl phosphite, dinonyl phenyl bis(nonylphenyl)phosphite, poly(dipropyleneglycol)phenyl phosphite, tetraphenyldipropylene glycol diphosphite, tris nonylphenyl phosphite, tris(2,4-di-tert-butylphenyl)phosphite, tris(2,4-di-tert-butyl-5-methylphenyl)phosphite, tris[2-tert-butyl-4-(3-tert-butyl-4-hydroxy-5-methylphenylthio)-5-methylphenyl]phosphite, tri(decyl)phosphite, octyl diphenyl phosphite, di(decyl)monophenyl phosphite, a mixture of distearyl pentaerythritol and calcium stearate, alkyl (C10) bisphenol A phosphite, tetraphenyl-tetra(tridecyl)pentaerythritol tetraphosphite, bis(2,4-di-tert-butyl-6-methylphenyl)ethyl phosphite, tetra(tridecyl)isopropylidene diphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, (1-methyl-1-propenyl-3-ylidene) tris(1,1-dimethylethyl)-5-methyl-4,1-phenylene)hexatridecyl phosphite, 2,2'-methylenebis(4,6-di-tert-butylphenyl)-2-ethylhexyl phosphite, 2,2'-methylenebis(4,6-di-tert-butylphenyl)octadecyl phosphite, 2,2'-ethylidenebis(4,6-di-tert-butylphenyl)fluorophosphite, 4,4'-butylidenebis(3-methyl-6-tert-butylphenylditridecyl)phosphite, tris(2-[(2,4,8,10-tetrakis-tert-butyldibenzo[d,f][1,3,2]dioxaphosphepin-6-yl)oxy]ethyl)amine, 3,9-bis(4-nonylphenoxy)-2,4,8,10-tetraoxa-3,9-diphosphespiro[5,5]undecane, 2,4,6-tri-tert-butylphenyl-2-butyl-2-ethyl-1,3-propanediol phosphite, poly 4,4'-isopropylidenediphenol C12-15 alcohol phosphite, bis(diisodecyl)pentaerythritol diphosphite, bis(tridecyl)pentaerythritol diphosphite, bis(octadecyl)pentaerythritol diphosphite, bis(nonylphenyl)pentaerythritol diphosphite, bis(2,4-di-tert-butylphenyl)pentaerythritol diphosphite, bis(2,4,6-tri-tert-butylphenyl)pentaerythritol diphosphite, bis(2,6-di-tert-butyl-4-methylphenyl)pentaerythritol diphosphite, bis(2,4-dicumylphenyl)pentaerythritol diphosphite, and the like.

Examples of the sulfur-based antioxidants include tetrakis[methylene-3-(laurylthio)propionate] methane, bis(methyl-4-[3-n-alkyl(C12/C14)thiopropionyloxy]5-tert-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-tert-butyl-m-cresol), 2,2'-thiobis(6-tert-butyl-p-cresol), and distearyl-disulfide.

The other antioxidants include nitrone compounds, such as N-benzyl-α-phenylnitrone, N-ethyl-α-methylnitrone, N-octyl-α-heptylnitrone, N-lauryl-α-undecylnitrone, N-tetradecyl-α-tridecylnitrone, N-hexadecyl-α-pentadecylnitrone, N-octyl-α-heptadecylnitrone, N-hexadecyl-α-heptadecylnitrone, N-octadecyl-α-pentadecylnitrone, N-heptadecyl-α-heptadecylnitrone, and N-octadecyl-α-heptadecylnitrone, benzofuran compounds, such as 3-arylbenzofuran-2(3H)-one, 3-(alkoxyphenyl)benzofuran-2-one, 3-(acyloxyphenyl)benzofuran-2(3H)-one, 5,7-di-tert-butyl-3-(3,4-dimethylphenyl)-benzofuran-2(3H)-one, 5,7-di-tert-butyl-3-(4-hydroxyphenyl)-benzofuran-2(3H)-one, 5,7-di-tert-butyl-3-{4-(2-hydroxyethoxy)phenyl}-benzofuran-2(3H)-one, 6-(2-(4-(5,7-di-tert-2-oxo-2,3-dihydrobenzofuran-3-yl)phenoxy)ethoxy)-6-oxohexyl-6-((6-hydroxyhexanoyl)oxy)hexanoate, and 5-di-tert-butyl-3-(4-((15-hydroxy-3,6,9,13-tetraoxapentadecyl)oxy)phenyl)benzofuran-2(3H)one, and the like.

Examples of the hindered amine compounds include 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butanetetracarboxylate, bis(2,2,6,6-tetramethyl-4-piperidyl)·di(tridecyl)-1,2,3,4-butanetetracarboxylate, bis(1,2,2,6,6-pentamethyl-4-piperidyl)-di(tridecyl)-1,2,3,4-butanetetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/succinic acid diethyl polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8-12-tetraazadodecane, 1,6,11-tris[2,4-bis(N-butyl-N-(2,2,6,6-tetramethyl-4-piperidyl)amino)-s-triazine-6-ylamino] undecane, 1,6,11-tris[2,4-bis(N-butyl-N-(1,2,2,6,6-pentamethyl-4-piperidyl)amino)-s-triazine-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, bis(1-undecyloxy-2,2,6,6-tetramethylpiperidine-4-yl)carbonate, 2,2,6,6-tetramethyl-4-piperidyl hexadecanoate, 2,2,6,6-tetramethyl-4-piperidyl octadecanoate, and the like.

Examples of the ultraviolet absorbers include 2-hydroxybenzophenones, such as 2,4-dihydroxybenzophenone and 5,5'-methylenebis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), polyethylene glycol ester of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl] benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; benzoates, such as phenyl salicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate, and behenyl(3,5-di-tert-butyl-4-hydroxy)benzoate; substituted oxanilides, such as 2-ethyl-2'-ethoxyoxanilide and 2-ethoxy-4'-dodecyloxanilide; cyanoacrylates, such as ethyl-α-cyano-β,β-diphenylacrylate and methyl-2-cyano-3-methyl-3-(p-methoxyphenyl)acrylate; triazines, such as 2-(4,6-diphenyl-1,3,5-triazine-2-yl)-5-hexyloxyphenol, 2-(2-hydroxy-4-octoxyphenyl)-4,6-bis(2,4-dimethylphenyl)-1,3,5-triazine, trioctyl-2,2',2"-((1,3,5-triazine-2,4,6-triyl)tris(3-hydroxybenzene-4-,1-diyl)tripropionate), 2-(4,6-diphenyl-1,3,5-triazine-2-yl)-5-[2-(2-ethylhexanoyloxy)ethoxy]phenol, 2,4,6-tris(2-hydroxy-4-hexyloxy-3-methylphenyl)-1,3,5-triazine, and 1,12-bis[2-[4-(4,6-diphenyl-1,3,5-triazine-2-yl)-3-hydroxyphenoxy]ethyl]dodecanedioate; various metal salts and metal chelates, in particular, salts and chelates of nickel and chromium, and the like.

Examples of the fatty acid metal salts include metal salts of fatty acids having 12 to 30 carbon atoms including linear or branched fatty acid residues. Examples of metal ions constituting the fatty acid metal salts include sodium ion, potassium ion, lithium ion, dihydroxyaluminum ion, calcium ion, zinc ion, barium ion, magnesium ion, hydroxyaluminum ion, and the like. Among the above, sodium ion, potassium ion, lithium ion, and calcium ion are preferable. Fatty acids constituting the fatty acid metal salts include lauric acid, myristic acid, palmitic acid, stearic acid, oleic acid, linoleic acid, linolenic acid, arachidic acid, arachidonic acid, behenic acid, lignoceric acid, cerotic acid, montanic acid, melissic acid, and the like. Among the above, myristic acid and stearic acid are preferable. The fatty acids constituting the fatty acid metal salts may be those in which one or two or more of the hydrogen atoms of the fatty acid residues are substituted with hydroxyl groups. Examples of such fatty acids include 12-hydroxystearic acid, 12-hydroxyoleic acid, and the like.

Examples of the flame retardants include phosphonate esters, such as triphenyl phosphate, tricresyl phosphate, trixylenyl phosphate, cresyl diphenyl phosphate, cresyl-2,6-dixylenyl phosphate, resorcinol bis(diphenyl phosphate), (1-methylethylidene)-4,1-phenylene tetraphenyl diphosphate, 1,3-phenylene tetrakis(2,6-dimethyl phenyl)phosphate, and aromatic phosphate esters of trade name "ADK STAB FP-500", "ADK STAB FP-600", and "ADK STAB FP-800" manufactured by ADEKA Corporation, phosphonate esters, such as divinyl phenylphosphonate, diallyl phenylphosphonate, and (1-butenyl) phenylphosphonate, phosphinic esters, such as phenyl diphenylphosphinate, methyl diphenylphosphinate, and 9,10-dihydro-9-oxa-10-phosphaphenanthrene-10-oxide derivative, phosphazene compounds, such as bis(2-allylphenoxy)phosphazene and dicresyl phosphazene, phosphorus flame retardants, such as melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinylbenzyl compounds, and red phosphorus, metal hydroxides, such as magnesium hydroxide and aluminum hydroxide, brominated flame retardants, such as a brominated bisphenol A type epoxy resin, a brominated phenol novolak type epoxy resin, hexabromobenzene, pentabromotoluene, ethylenebis(pentabromophenyl), ethylenebistetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, and 2,4,6-tris(tribromophenoxy)-1,3,5-triazine, tribromophenylmaleimide, tribromophenylacrylate, tribromophenylmethacrylate, tetrabromobisphenol A-type dimethacrylate, pentabromobenzylacrylate, and brominated styrene, and the like. These flame retardants are preferably used in combination with anti-drip agents, such as a fluorocarbon resin, or flame retardant aids, such as polyhydric alcohol and hydrotalcite.

Examples of the fillers include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, silica, alumina, potassium titanate whisker, wollastonite, fibrous magnesium oxysulfate, and the like, which can be used with appropriate selection of the particle diameters (for fibrous fillers, fiber diameters and lengths, and aspect ratio). Among the fillers above, talc is particularly preferably used because of its excellent effect of imparting rigidity and its easy availability. Fillers that have been subjected to surface treatment as necessary can also be used.

Examples of the lubricants include fatty acid esters, such as fatty acid methyl, fatty acid ethyl, ethylene glycol fatty acid monoesters, propylene glycol fatty acid monoesters, ethylene glycol fatty acid diesters, propylene glycol fatty acid diesters, glycerol fatty acid monoesters, glycerol fatty acid diesters, glycerol fatty acid triesters, pentaerythritol fatty acid monoesters, pentaerythritol fatty acid diesters, pentaerythritol fatty acid triesters, and pentaerythritol fatty acid tetraesters, fatty acid amides, such as fatty acid monoamides, alkylenebis fatty acid amides, alkylol fatty acid amides, and N-alkyl fatty acid amides, fatty acids, such as lauric acid, myristic acid, palmitic acid, stearic acid, oleic acid, linoleic acid, linolenic acid, arachidic acid, arachidonic acid, behenic acid, erucic acid, lignoceric acid, cerotic acid, montanic acid, melissic acid, 12-hydroxy stearic acid, and ricinoleic acid, higher alcohols, such as stearyl alcohol, sugar alcohols, such as mannitol, and the like.

The hydrotalcites include complex salt compounds containing magnesium, aluminum, a hydroxyl group, a carbonate group, and optional water of crystallization, for example, and may be a natural product or a synthetic product. Further, the crystal structure, the particle shape, and the particle size of the hydrotalcites are not particularly limited. Further, the hydrotalcites may be those in which at least part of magnesium or aluminum is substituted with another metal, such as alkali metal or zinc, and at least part of a hydroxyl group or a carbonic acid group is substituted with another anionic group. Further, the hydrotalcites may be those obtained by dehydrating water of crystallization, and the surface thereof may be coated with higher fatty acids, such as stearic acid, higher fatty acid metal salts, such as alkali metal oleic acid salt, organic sulfonic acid metal salts, such as dodecylbenzenesulfonic acid alkali metal salt, higher fatty acid amides, higher fatty acid esters, wax, and the like.

Examples of the antistatic agents include low-molecular weight antistatic agents by nonionic, anionic, cationic, or amphoteric surfactants and polymer antistatic agents by polymers. The nonionic surfactants include polyethylene glycol nonionic surfactants, such as higher alcohol ethylene oxide adducts, fatty acid ethylene oxide adducts, higher alkylamine ethylene oxide adducts, and polyolefin glycol ethylene oxide adducts; polyhydric alcohol nonionic surfactants, such as polyethylene oxide, fatty acid esters of glycerol, fatty acid esters of pentaerythritol, fatty acid esters of sorbitol or sorbitan, alkyl ethers of polyhydric alcohols, and aliphatic amides of alkanolamines; and the like. Examples of the anionic surfactants include carboxylate salts, such as alkali metal salts of higher fatty acids; sulfate ester salts, such as higher alcohol sulfate ester salts and higher alkyl ether sulfate ester salts; sulfonates, such as alkyl benzenesulfonates, alkyl sulfonates, and paraffin sulfonates; phosphate ester salts, such as higher alcohol phosphate ester salts; and the like. The cationic surfactants include quaternary ammonium salts, such as alkyltrimethyl ammonium salts, and the like. The amphoteric surfactants include amino acid amphoteric surfactants, such as higher alkyl amino propionates, betaine amphoteric surfactants, such as higher alkyl dimethyl betaine and higher alkyl dihydroxy ethyl betaine, and the like. Among the above, the anionic surfactants are preferable, and particularly sulfonates, such as alkylbenzene sulfonates, alkyl sulfonates, and paraffin sulfonates, are preferable.

Examples of the polymer antistatic agents include ionomers and block polymers including polyethylene glycol as a hydrophilic moiety. Examples of the ionomers include those described in JP2010-132927A. Examples of the polymers including polyethylene glycol as a hydrophilic moiety include polyether ester amides described in JP H07-10989A, polymers containing polyolefin and polyethylene glycol described in US6552131B1, and polymers containing polyester and polyethylene glycol described in JP2016-023254A.

The fluorescent whitening agents are compounds that exhibit fluorescence action of absorbing ultraviolet rays of sunlight or artificial light, converting them into visible light rays of violet to blue, and radiating them, thereby promoting the whiteness and blueness of molded materials. Examples of the fluorescent whitening agents include a benzoxazole compound C.I. Fluorescent Brightener 184; a coumarin compound C.I. Fluorescent Brightener 52; diaminostilbene disulfonic compounds C.I. Fluorescent Brighteners 24, 85, and 71; and the like.

The colorants include pigments, such as Pigment Reds 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; Pigment Oranges 13, 31, 34, 36, 38, 43, 46, 48, 49, 51, 52, 55, 59, 60, 61, 62, 64, 65, and 71; Pigment Yellows 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; Pigment Greens 7, 10, and 36; Pigment Blues 15, 15:1, 15:2, 15:3, 15:4, 15:5, 15:6, 22, 24, 29, 56, 60, 61, 62, and 64; Pigment Violets 1, 15, 19, 23, 27, 29, 30, 32, 37, 40, and 50, dyes, such as azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes, and cyanine dyes, and the like.

Next, a method for manufacturing a resin composition of this embodiment is described.

### <Method for producing resin composition>

The method for producing a resin composition of this embodiment includes a blending step of blending a crystalline resin, a first compound, and a second compound different from the first compound, in which the first compound and the second compound contain a group represented by General Formula (1) above, and the number T₁ of triazine rings contained in the first compound and the number T₂ of triazine rings contained in the second compound satisfy T₁ < T₂.

According to the method for producing a resin composition of this embodiment, a resin composition improved in crystallinity of the crystalline resin can be produced.

Examples of a method for mixing the crystalline resin, the first compound, and the second compound in the blending step include, but not particularly limited to, a method including adding the first compound and the second compound to the crystalline resin, and then mixing them using a mixing device, such as an FM mixer, a mill roll, a Banbury mixer, or a super mixer, or the like. Herein, for the first compound and the second compound, both the components may be added at once, or each component may be sequentially added. The first compound and the second compound may also be added as a resin additive composition described later. Further, at least one of the other additives described above may be blended in the blending step. The method for manufacturing a resin composition of this embodiment may be a method further including, in addition to the above-described blending step, a melting and kneading step of melting and kneading the mixture obtained in the blending step using a melting and kneading device, such as a single-screw extruder or a twin-screw extruder. Herein, the temperature of the melting and kneading in the melting and kneading step can be set to 180 to 280°C, for example. The method for producing a resin composition of this embodiment may be a method further including a granulation step of granulating the mixture obtained in the melting and kneading step. Herein, examples of a granulation method include, but not particularly limited to, a method using a granulation device, such as a pelletizer, and the like. The shape of the resin composition obtained by the granulation is not particularly limited, and can be set to a pellet shape, for example. Further, the method for producing a resin composition of this embodiment may be a method including adding at least one of the first compound, the second compound and, as required, the other additives described above before or during the polymerization of crystalline resin monomers or oligomers, and adding the remaining components to the obtained polymer.

Next, a molded article of this embodiment is described.

### <Molded article>

The molded article of this embodiment is obtained by molding the resin composition described above.

The molded article of this embodiment contains the resin composition improved in crystallinity of the crystalline resin, and therefore has excellent characteristics, such as transparency and dynamic characteristic.

Examples of the molded article include injection-molded articles, fibers, flat yarns, biaxially oriented films, uniaxially oriented films, non-oriented films, sheets, thermoforming molded articles, extrusion blow molded articles, injection blow molded articles, injection stretch blow molded articles, contour extrusion molded articles, rotational molded articles, and the like. Preferable specific examples of the molded article include containers, such as bottles, jars, cups, buckets, boxes, cans, and tanks.

Example of a method for producing the molded article include, but not particularly limited to, methods, such as injection molding methods, extrusion molding methods, blow molding methods, rotational molding methods, vacuum molding methods, inflation molding methods, calendar molding methods, slush molding methods, dip molding methods, and thermoforming molding methods.

Next, a resin additive composition of this embodiment is described.

### <Resin additive composition>

The resin additive composition of this embodiment contains a first compound and a second compound different from the first compound, in which the first compound and the second compound contain a group represented by General Formula (1) above, and the number T₁ of triazine rings contained in the first compound and the number T₂ of triazine rings contained in the second compound satisfy T₁ < T₂.

According to the resin additive composition of this embodiment, the crystallinity of the crystalline resin can be improved. More specifically, the resin additive composition of this embodiment can be used as a crystallinity improver for crystalline resin.

The first compound and the second compound contained in the resin additive composition of this embodiment include the same as those contained in the resin composition described above.

In the resin additive composition of this embodiment, the content of the second compound can be set to 0.1 to 10000 parts by mass based on the content of the first compound of 100 parts by mass, for example. From the viewpoint of obtaining a resin additive composition further improving crystallinity of the crystalline resin, the content of the second compound is preferably 0.5 to 1000 parts by mass, more preferably 1 to 100 parts by mass, still more preferably 2 to 50 parts by mass, and even still more preferably 3 to 10 parts by mass based on the content of the first compound of 100 parts by mass, for example.

The resin additive composition of this embodiment may further contain, in addition to the first compound and the second compound, the compound represented by General Formula (1) above. The resin additive composition of this embodiment may further contain one or two or more types of the other additives exemplified as the components that may be contained in the resin composition described above in a range where the crystallinity improvement effect of the crystalline resin is not impaired.

The resin additive composition of this embodiment may be a one-pack additive composition granulated by blending a granulation aid, such as a binder, a wax, a solvent, or silica, in a range where the crystallinity improvement effect of the crystalline resin is not impaired. The resin additive composition of this embodiment may be a masterbatch further containing resin components.

In the resin additive composition of this embodiment, the total of the content ratio of the first compound and the content ratio of the second compound based on the whole resin additive composition can be set to 10 to 100% by mass, for example. From the viewpoint of obtaining a resin additive composition further improving crystallinity of the crystalline resin, the total of the content ratio of the first compound and the content ratio of the second compound based on the whole resin additive composition is preferably 20 to 100% by mass, more preferably 40 to 100% by mass, still more preferably 60 to 100% by mass, and even still more preferably 80 to 100% by mass. In the resin additive composition of this embodiment, the content ratio of the first compound based on the whole resin additive composition can be set to 0.1 to 99.9% by mass, for example, and the content ratio of the second compound based on the whole resin additive composition can be set to 0.1 to 99.9 % by mass, for example.

Next, a material for resin additive composition of this embodiment is described.

### <Material for resin additive composition>

A first material for resin additive composition of this embodiment is a material for resin additive composition for use in combination with a second compound different from a first compound, and contains the first compound, in which the first compound and the second compound contain a group represented by General Formula (1) above, and the number T₁ of triazine rings contained in the first compound and the number T₂ of triazine rings contained in the second compound satisfy T₁ < T₂.

According to the resin additive composition using the first material for resin additive composition of this embodiment and the second compound, the crystallinity of the crystalline resin can be improved.

A second material for resin additive composition of this embodiment is a material for resin additive composition for use in combination with a first compound, and contains a second compound different from the first compound, in which the first compound and the second compound contain a group represented by General Formula (1) above, and the number T₁ of triazine rings contained in the first compound and the number T₂ of triazine rings contained in the second compound satisfy T₁ < T₂.

According to the resin additive composition using the second material for resin additive composition of this embodiment and the first compound, the crystallinity of the crystalline resin can be improved.

Next, a method for improving crystallinity of a crystalline resin of this embodiment is described.

### <Method for improving crystallinity of crystalline resin>

The method for improving crystallinity of a crystalline resin of this embodiment includes a blending step of blending a crystalline resin, a first compound, and a second compound different from the first compound, in which the first compound and the second compound contain a group represented by General Formula (1) above, and the number T₁ of triazine rings contained in the first compound and the number T₂ of triazine rings contained in the second compound satisfy T₁ < T₂.

According to the method for improving crystallinity of a crystalline resin of this embodiment, the crystallinity of the crystalline resin can be improved.

Examples of further embodiments of the present invention include the following.
[1] A resin composition containing:
   a crystalline resin;
   a first compound; and
   a second compound different from the first compound, in which
   the first compound and the second compound contain a group represented by General Formula (1) below, and
   the number T₁ of triazine rings contained in the first compound and the number T₂ of triazine rings contained in the second compound satisfy T₁ < T₂, 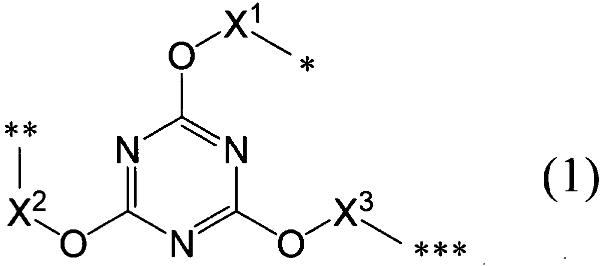
   wherein, in General Formula (1), X¹, X², and X³ each independently represent an unsubstituted or substituted phenylene group, and *, **, and *** represent sites bonding to other atoms.
[2] The resin composition according to [1], in which X¹, X², and X³ are unsubstituted phenylene groups.
[3] The resin composition according to [1], in which
   the first compound is a compound represented by General Formula (2) below, and
   the second compound is a compound represented by General Formula (3) below, 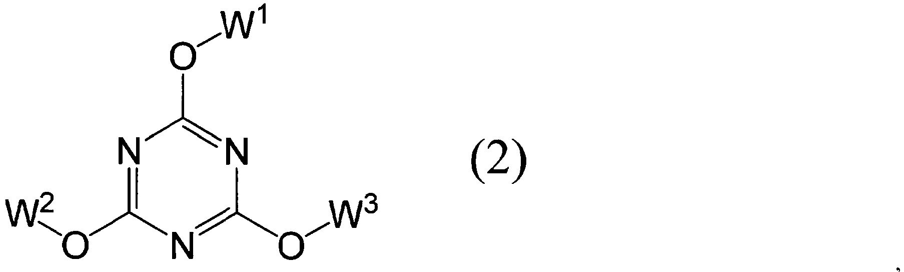 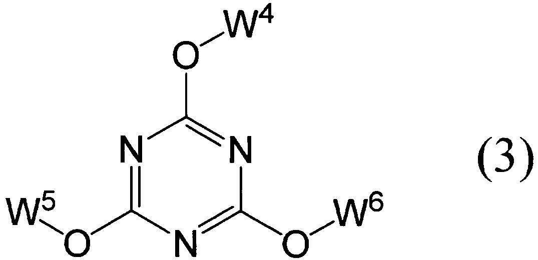
   wherein, in General Formula (2) and General Formula (3), W¹ to W⁶ each independently represent a group represented by General Formula (4) below, 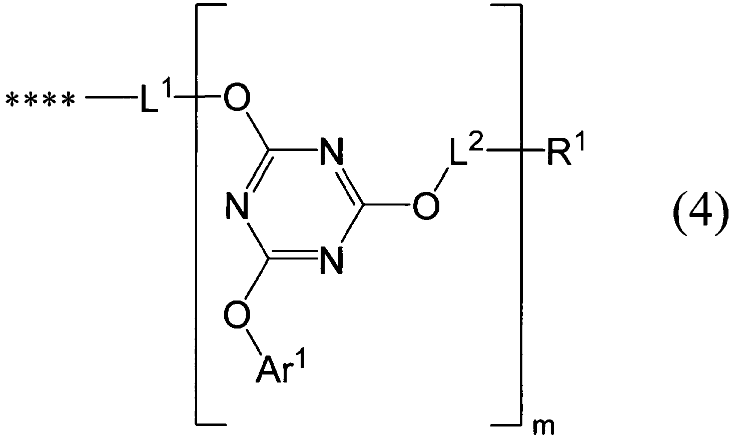
   wherein, in General Formula (4), Ar¹ represents an unsubstituted or substituted phenyl group, R¹ represents a hydrogen atom or a monovalent substituent, L¹ and L² each independently represent a group represented by General Formula (5) below, m represents 0 or an integer of 1 or more, and **** represents a site bonding to an oxygen atom, 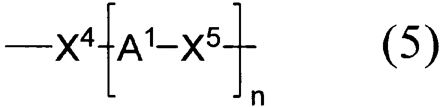
   wherein, in General Formula (5), X⁴ and X⁵ each independently represent an unsubstituted or substituted phenylene group, A¹ represents a direct bonded or an unsubstituted or substituted alkanediyl group, and n represents 0 or 1.
[4] The resin composition according to [3], in which the substituent when Ar¹ is a substituted phenyl group is an alkyl group having 1 to 10 carbon atoms, an alkoxy group having 1 to 10 carbon atoms, an aryl group having 6 to 20 carbon atoms, an aryloxy group having 6 to 20 carbon atoms, or a halogen atom.
[5] The resin composition according to [3] or [4], in which R¹ is a hydrogen atom, an alkyl group having 1 to 10 carbon atoms, an alkoxy group having 1 to 10 carbon atoms, an aryl group having 6 to 20 carbon atoms, an aryloxy group having 6 to 20 carbon atoms, or a halogen atom.
[6] The resin composition according to any one of [3] to [5], in which X⁴ and X⁵ are unsubstituted phenylene groups.
[7] The resin composition according to any one of [3] to [6], in which A¹ is a direct bond.
[8] The resin composition according to any one of [3] to [7], in which m is 0 or an integer from 1 to 100, preferably 0 or an integer from 1 to 5, more preferably 0 or an integer from 1 to 2, and still more preferably 0 or 1.
[9] The resin composition according to any one of [1] to [8], in which the value of T₂ - T₁ is an integer from 1 to 10, preferably an integer from 1 to 5, more preferably an integer from 1 to 3, still more preferably an integer from 1 to 2, and particularly preferably 1.
[10] The resin composition according to any one of [1] to [9], in which the value of T₁ is an integer from 1 to 10, preferably an integer from 1 to 5, more preferably an integer from 1 to 3, still more preferably an integer from 1 to 2, and particularly preferably 2.
[11] The resin composition according to any one of [1] to [10], in which the value of T₂ is an integer from 2 to 11, preferably an integer from 2 to 8, more preferably an integer from 2 to 5, still more preferably an integer from 2 to 3, and particularly preferably 3.
[12] The resin composition according to any one of [1] to [11], in which the crystalline resin contains a polyolefin resin, preferably at least one selected from the group consisting of a polyethylene resin and a polypropylene resin, more preferably a polypropylene resin, and still more preferably a random copolymer polypropylene.
[13] The resin composition according to any one of [1] to [12], in which the total of the content of the first compound and the content of the second compound is 0.001 to 10 parts by mass, preferably 0.002 to 5 parts by mass, more preferably 0.003 to 3 parts by mass, still more preferably 0.005 to 1 part by mass, even still more preferably 0.01 to 0.5 parts by mass, yet even still more preferably 0.02 to 0.2 parts by mass, and particularly preferably 0.03 to 0.1 parts by mass based on 100 parts by mass of the crystalline resin.
[14] The resin composition according to any one of [1] to [13], in which the content of the second compound is 0.1 to 10000 parts by mass, preferably 0.5 to 1000 parts by mass, more preferably 1 to 100 parts by mass, still more preferably 2 to 50 parts by mass, and even still more preferably 3 to 10 parts by mass based on the content of the first compound of 100 parts by mass.
[15] A molded article, which is obtained by molding the resin composition according to any one of [1] to [14].
[16] A resin additive composition containing:
   a first compound; and
   a second compound different from the first compound, in which
   the first compound and the second compound contain a group represented by General Formula (1) below, and
   the number T₁ of triazine rings contained in the first compound and the number T₂ of triazine rings contained in the second compound satisfy T₁ < T₂, 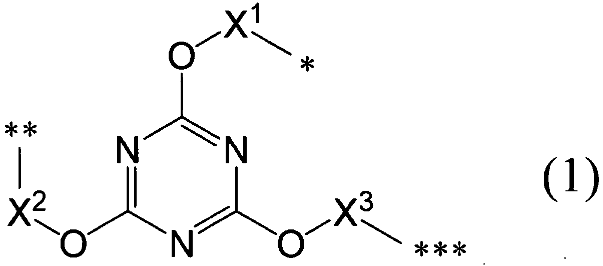
   wherein, in General Formula (1), X¹, X², and X³ each independently represent an unsubstituted or substituted phenylene group, and *, **, and *** represent sites bonding to other atoms.
[17] The resin additive composition according to [16], in which X¹, X², and X³ are unsubstituted phenylene groups.
[18] The resin additive composition according to [16], in which
   the first compound is a compound represented by General Formula (2) below, and
   the second compound is a compound represented by General Formula (3) below, 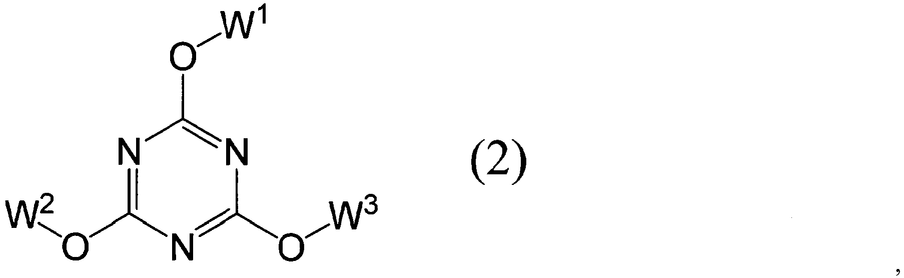 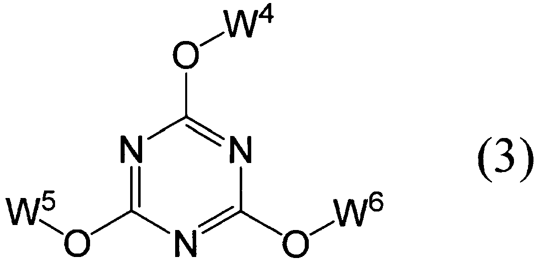
   wherein, in General Formula (2) and General Formula (3), W¹ to W⁶ each independently represent a group represented by General Formula (4) below, 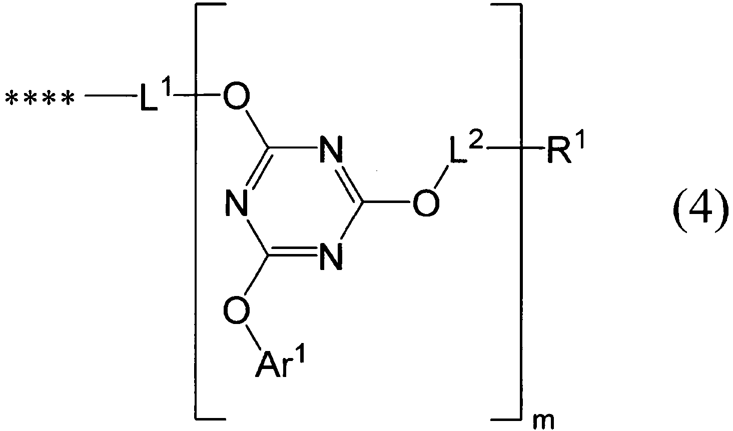
   wherein, in General Formula (4), Ar¹ represents an unsubstituted or substituted phenyl group, R¹ represents a hydrogen atom or a monovalent substituent, L¹ and L² each independently represent a group represented by General Formula (5) below, m represents 0 or an integer of 1 or more, and **** represents a site bonding to an oxygen atom, 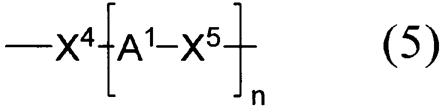
   wherein, in General Formula (5), X⁴ and X⁵ each independently represent an unsubstituted or substituted phenylene group, A¹ represents a direct bonded or an unsubstituted or substituted alkanediyl group, and n represents 0 or 1.
[19] The resin additive composition according to [18], in which the substituent when Ar¹ is a substituted phenyl group is an alkyl group having 1 to 10 carbon atoms, an alkoxy group having 1 to 10 carbon atoms, an aryl group having 6 to 20 carbon atoms, an aryloxy group having 6 to 20 carbon atoms, or a halogen atom.
[20] The resin additive composition according to [18] or [19], in which R¹ is a hydrogen atom, an alkyl group having 1 to 10 carbon atoms, an alkoxy group having 1 to 10 carbon atoms, an aryl group having 6 to 20 carbon atoms, an aryloxy group having 6 to 20 carbon atoms, or a halogen atom.
[21] The resin additive composition according to any one of [18] to [20], in which X⁴ and X⁵ are unsubstituted phenylene groups.
[22] The resin additive composition according to any one of [18] to [21], in which A¹ is a direct bond.
[23] The resin additive composition according to any one of [18] to [22], in which m is 0 or an integer from 1 to 100, preferably 0 or an integer from 1 to 5, more preferably 0 or an integer from 1 to 2, and still more preferably 0 or 1.
[24] The resin additive composition according to any one of [16] to [23], in which the value of T₂ - T₁ is an integer from 1 to 10, preferably an integer from 1 to 5, more preferably an integer from 1 to 3, still more preferably an integer from 1 to 2, and particularly preferably 1.
[25] The resin additive composition according to any one of [16] to [24], in which the value of T₁ is an integer from 1 to 10, preferably an integer from 1 to 5, more preferably an integer from 1 to 3, still more preferably an integer from 1 to 2, and particularly preferably 2.
[26] The resin additive composition according to any one of [16] to [25], in which the value of T₂ is an integer from 2 to 11, preferably an integer from 2 to 8, more preferably an integer from 2 to 5, still more preferably an integer from 2 to 3, and particularly preferably 3.
[27] The resin additive composition according to any one of [16] to [26], in which the content of the second compound is 0.1 to 10000 parts by mass, preferably 0.5 to 1000 parts by mass, more preferably 1 to 100 parts by mass, still more preferably 2 to 50 parts by mass, and even still more preferably 3 to 10 parts by mass based on the content of the first compound of 100 parts by mass.
[28] The resin additive composition according to any one of [16] to [27], in which the resin additive composition is a crystallinity improver for crystalline resin.
[29] The resin additive composition according to [28], in which the crystalline resin contains a polyolefin resin, preferably at least one selected from the group consisting of a polyethylene resin and a polypropylene resin, more preferably a polypropylene resin, and still more preferably a random copolymer polypropylene.
[30] The resin additive composition according to any one of [16] to [29], in which the first compound and the second compound are added to the crystalline resin so that the total of the content of the first compound and the content of the second compound is 0.001 to 10 parts by mass, preferably 0.002 to 5 parts by mass, more preferably 0.003 to 3 parts by mass, still more preferably 0.005 to 1 part by mass, even still more preferably 0.01 to 0.5 parts by mass, yet even still more preferably 0.02 to 0.2 parts by mass, and particularly preferably 0.03 to 0.1 parts by mass based on 100 parts by mass of the crystalline resin.
[31] A method for producing a resin composition including a blending step of blending:
   a crystalline resin;
   a first compound; and
   a second compound different from the first compound, in which
   the first compound and the second compound contain a group represented by General Formula (1) below, and
   the number T₁ of triazine rings contained in the first compound and the number T₂ of triazine rings contained in the second compound satisfy T₁ < T₂, 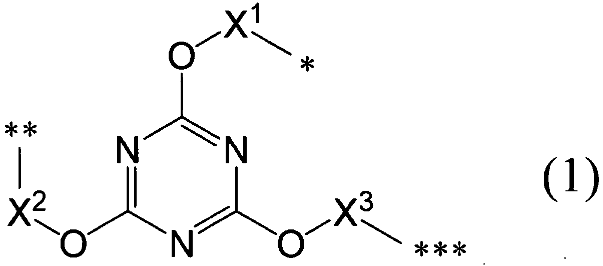
   wherein, in General Formula (1), X¹, X², and X³ each independently represent an unsubstituted or substituted phenylene group, and *, **, and *** represent sites bonding to other atoms.
[32] A method for improving crystallinity of a crystalline resin including a blending step of blending:
   a crystalline resin;
   a first compound; and
   a second compound different from the first compound, in which

   the first compound and the second compound contain a group represented by General Formula (1) below, and
   the number T₁ of triazine rings contained in the first compound and the number T₂ of triazine rings contained in the second compound satisfy T₁ < T₂, 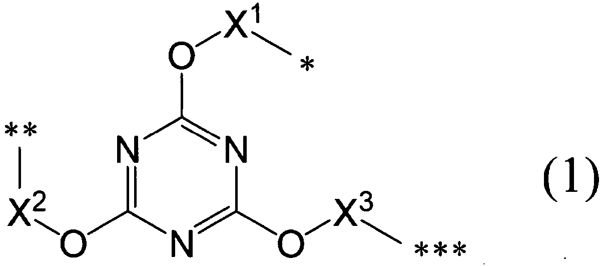
   wherein, in General Formula (1), X¹, X², and X³ each independently represent an unsubstituted or substituted phenylene group, and *, **, and *** represent sites bonding to other atoms.
[33] A material for resin additive composition for use in combination with a second compound different from a first compound, the material containing
   the first compound, in which
   the first compound and the second compound contain a group represented by General Formula (1) below, and
   the number T₁ of triazine rings contained in the first compound and the number T₂ of triazine rings contained in the second compound satisfy T₁ < T₂, 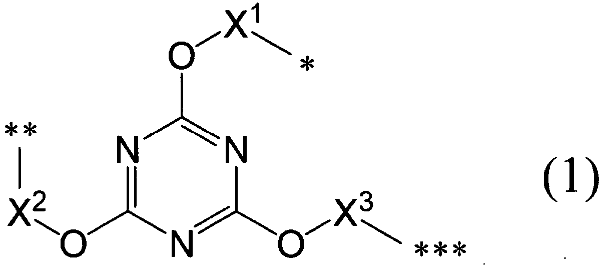
   wherein, in General Formula (1), X¹, X², and X³ each independently represent an unsubstituted or substituted phenylene group, and *, **, and *** represent sites bonding to other atoms.
[34] A material for resin additive composition for use in combination with a first compound, the material containing
   a second compound different from the first compound, in which
   the first compound and the second compound contain a group represented by General Formula (1) below, and
   the number T₁ of triazine rings contained in the first compound and the number T₂ of triazine rings contained in the second compound satisfy T₁ < T₂, 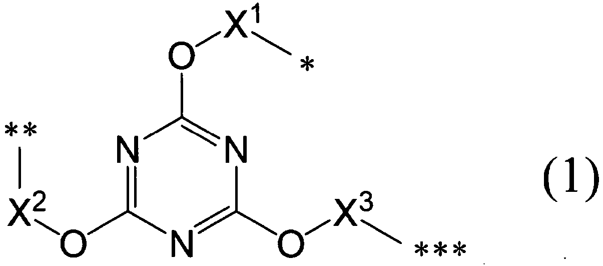
   wherein, in General Formula (1), X¹, X², and X³ each independently represent an unsubstituted or substituted phenylene group, and *, **, and *** represent sites bonding to other atoms.

The present invention is not limited to the above-described embodiments. The above-described embodiments are examples, and those having substantially the same configuration as those of the technical idea described in Claims of the present invention and exhibiting similar action are included in the technical scope of the present invention.

### EXAMPLES

Hereinafter, the present invention is more specifically described by way of Examples, but the present invention is not restricted to the following Examples.

### <Preparation of resin additive composition>

### (Resin additive compositions 1 to 8)

The first compound and the second compound were blended in the blending amounts shown in Table 1 below and uniformly mixed to give resin additive compositions 1 to 8. In Table 1, the unit of the blending amount of each component is "part(s) by mass".

The first compound and the second compound used in this example are as follows.

### First compound

1A: Compound No. 6
1B: Compound No. 13
1C: Compound No. 19
1D: Compound No. 24

### Second compound

2A: Compound No. 34
2B: Compound No. 33
2C: Compound No. 32
2D: Compound No. 38

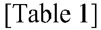

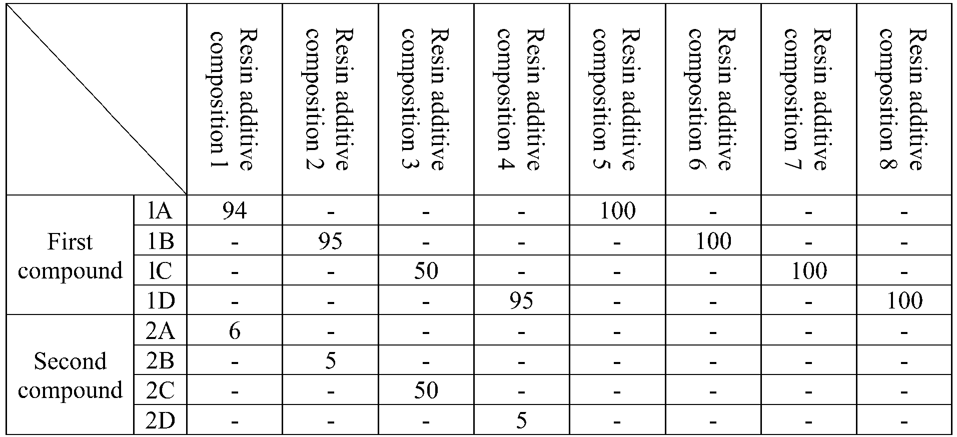

### (Examples 1 to 4 and Comparative Examples 1 to 5)

Based on 100 parts by mass of a random copolymer polypropylene (MFR = 12 g/10 min at 230°C and under 2.16 kg load, trade name "Prime Polypro R720" manufactured by Prime Polymer Co., Ltd.), 0.05 parts by mass of tetrakis[methylene-3-(3',5'-tert-butyl-4'-hydroxyphenyl)propionate]methane, 0.1 parts by mass of tris(2,4-di-tert-butylphenyl)phosphite, 0.05 parts by mass of calcium stearate, and each of the resin additive compositions 1 to 8 prepared as described above were blended in the blending amounts shown in Table 2 below and uniformly mixed to give mixtures. Each mixture thus obtained was charged into a twin-screw extruder (manufactured by Toyo Seiki Seisaku-sho, Ltd.,, Labo Plastomill Micro to which to a small twin-screw segment 2D15W was connected), melted and kneaded at a melting temperature of 230°C and a screw speed of 150 rpm, and then granulated to give pellets. The obtained pellets were dried at 60°C for 8 hours and used as the resin compositions of Examples 1 to 4 and Comparative Examples 1 to 5. In Table 2, the unit of the blending amount of each of the resin additive compositions 1 to 8 is "part(s) by mass".

### <Characteristic evaluation>

The crystallization temperatures of the resin compositions of Examples 1 to 4 and Comparative Examples 1 to 5 were measured by a differential thermal analysis and used indices of the crystallinity of the resin composition. Specifically, the resin composition pellets were introduced into a differential scanning calorimeter (Diamond manufactured by Perkin Elmer), and the temperature was increased from room temperature to 230°C at a rate of 50°C/min under a nitrogen atmosphere and held for 20 minutes, and then the resin composition pellets were cooled to 50°C at -10°C/min, and the peak top temperature of the exothermic peak during the cooling step was defined as the crystallization temperature (°C). Table 2 shows the results.

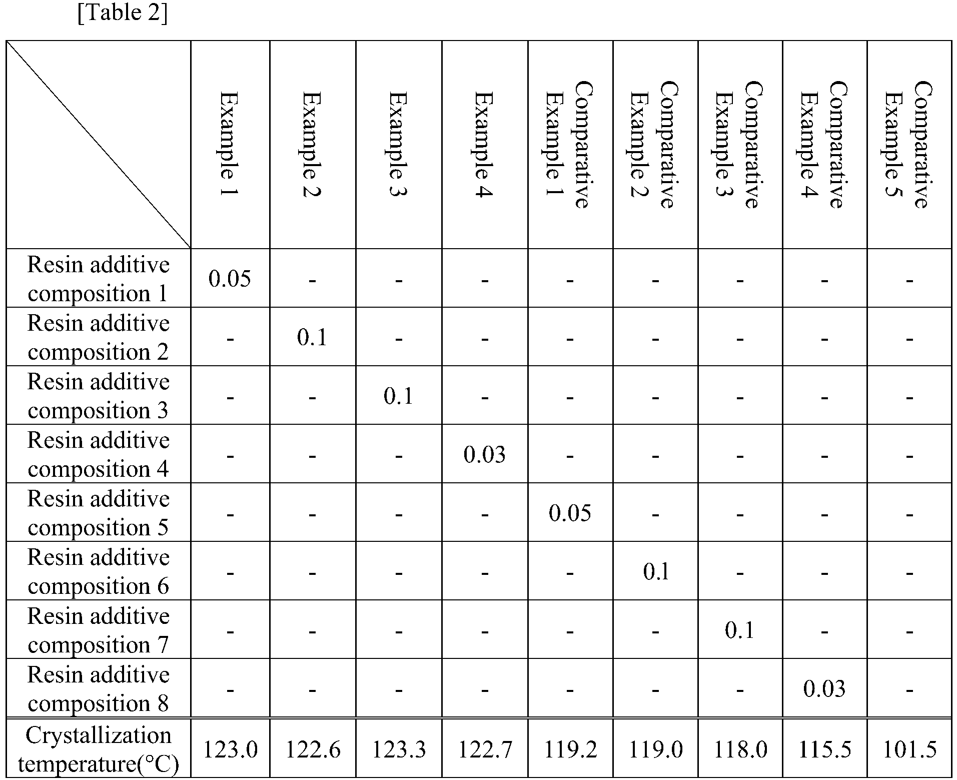

From the above, it has been confirmed that the resin composition of the present invention is improved in crystallinity of the crystalline resin.

## Claims

1. A resin composition comprising:
a crystalline resin;
a first compound; and
a second compound different from the first compound, wherein
the first compound and the second compound contain a group represented by General Formula (1) below, and
a number T₁ of triazine rings contained in the first compound and a number T₂ of triazine rings contained in the second compound satisfy T₁ < T₂, 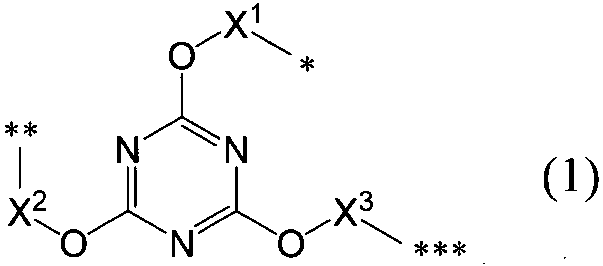
wherein, in General Formula (1), X¹, X², and X³ each independently represent an unsubstituted or substituted phenylene group, and *, **, and *** represent sites bonding to other atoms.

2. The resin composition according to claim 1, wherein
the first compound is a compound represented by General Formula (2) below, and
the second compound is a compound represented by General Formula (3) below, 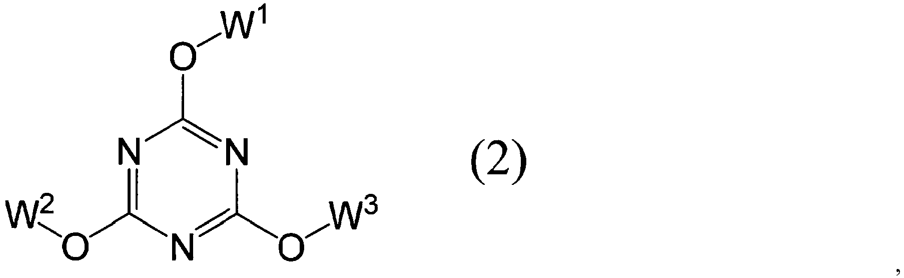 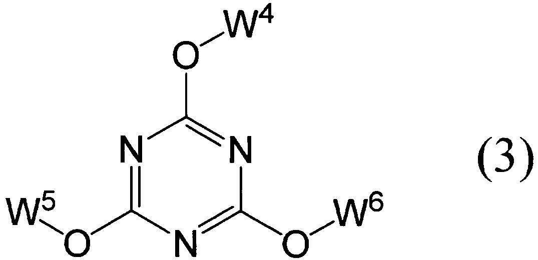
wherein, in General Formula (2) and General Formula (3), W¹ to W⁶ each independently represent a group represented by General Formula (4) below, 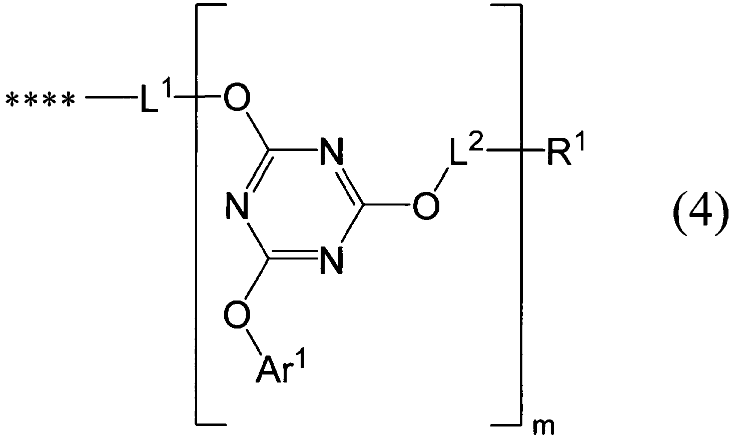
wherein, in General Formula (4), Ar¹ represents an unsubstituted or substituted phenyl group, R¹ represents a hydrogen atom or a monovalent substituent, L¹ and L² each independently represent a group represented by General Formula (5) below, m represents 0 or an integer of 1 or more, and **** represents a site bonding to an oxygen atom, 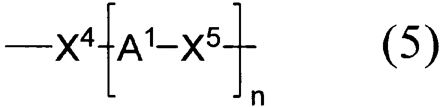
wherein, in General Formula (5), X⁴ and X⁵ each independently represent an unsubstituted or substituted phenylene group, A¹ represents a direct bonded or an unsubstituted or substituted alkanediyl group, and n represents 0 or 1.

3. The resin composition according to claim 1, wherein a value of T₂ - T₁ is an integer from 1 to 10.

4. The resin composition according to claim 1, wherein the crystalline resin contains a polyolefin resin.

5. A molded article obtained by molding the resin composition according to any one of claims 1 to 4.

6. A resin additive composition comprising:
a first compound; and
a second compound different from the first compound, wherein
the first compound and the second compound contain a group represented by General Formula (1) below, and
a number T₁ of triazine rings contained in the first compound and a number T₂ of triazine rings contained in the second compound satisfy T₁ < T₂, 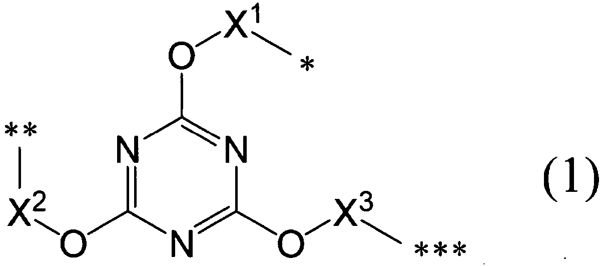
wherein, in General Formula (1), X¹, X², and X³ each independently represent an unsubstituted or substituted phenylene group, and *, **, and *** represent sites bonding to other atoms.

7. A method for producing a resin composition comprising a blending step of blending:
a crystalline resin;
a first compound; and
a second compound different from the first compound, wherein
the first compound and the second compound contain a group represented by General Formula (1) below, and
a number T₁ of triazine rings contained in the first compound and a number T₂ of triazine rings contained in the second compound satisfy T₁ < T₂, 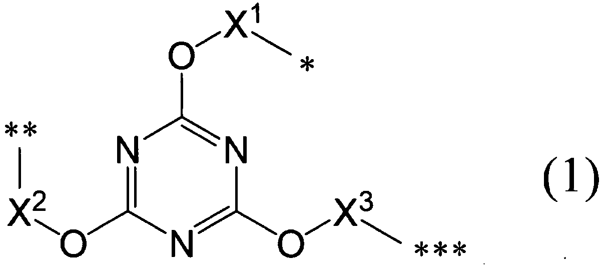
wherein, in General Formula (1), X¹, X², and X³ each independently represent an unsubstituted or substituted phenylene group, and *, **, and *** represent sites bonding to other atoms.

8. A method for improving crystallinity of a crystalline resin comprising a blending step of blending:
a crystalline resin;
a first compound; and
a second compound different from the first compound, wherein
the first compound and the second compound contain a group represented by General Formula (1) below, and
a number T₁ of triazine rings contained in the first compound and a number T₂ of triazine rings contained in the second compound satisfy T₁ < T₂, 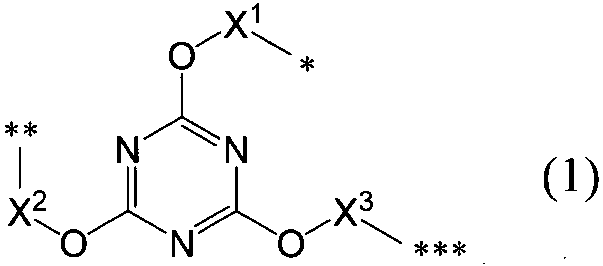
wherein, in General Formula (1), X¹, X², and X³ each independently represent an unsubstituted or substituted phenylene group, and *, **, and *** represent sites bonding to other atoms.

9. A material for resin additive composition for use in combination with a second compound different from a first compound, the material comprising
the first compound, wherein
the first compound and the second compound contain a group represented by General Formula (1) below, and
a number T₁ of triazine rings contained in the first compound and a number T₂ of triazine rings contained in the second compound satisfy T₁ < T₂, 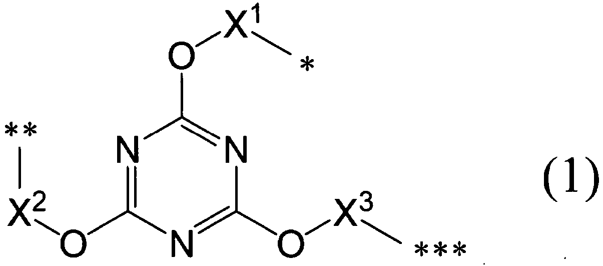
wherein, in General Formula (1), X¹, X², and X³ each independently represent an unsubstituted or substituted phenylene group, and *, **, and *** represent sites bonding to other atoms.

10. A material for resin additive composition for use in combination with a first compound, the material containing
a second compound different from the first compound, wherein
the first compound and the second compound contain a group represented by General Formula (1) below, and
a number T₁ of triazine rings contained in the first compound and a number T₂ of triazine rings contained in the second compound satisfy T₁ < T₂, 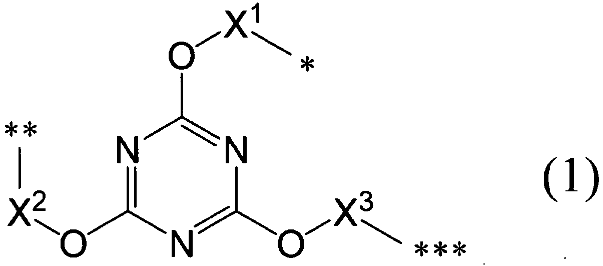
wherein, in General Formula (1), X¹, X², and X³ each independently represent an unsubstituted or substituted phenylene group, and *, **, and *** represent sites bonding to other atoms.
